# EUROPEAN PATENT APPLICATION

(11) **EP 4 637 227 A1**
(43) Date of publication of application: **22.10.2025**
(21) Application number: 24741136.6
(22) Date of filing: 03.01.2024
(51) Int. Cl.: H04W 56/00

(54) **SYNCHRONIZATION SIGNAL BLOCK MEASUREMENT METHOD AND APPARATUS**

(30) Priority: 10.01.2023 CN 202310033294
(71) Applicant: Huawei Technologies Co., Ltd., Shenzhen, Guangdong 518129 (CN)
(72) Inventor: HAN, Xiaojiang, Shenzhen, Guangdong 518129 (CN); ZHANG, Xiaoyu, Shenzhen, Guangdong 518129 (CN); SHI, Meng, Shenzhen, Guangdong 518129 (CN); WANG, Ni, Shenzhen, Guangdong 518129 (CN); CHEN, Liang, Shenzhen, Guangdong 518129 (CN)
(74) Representative: Goddar, Heinz J.
(86) International application number: PCT/CN2024/070372
(87) International publication number: WO 2024/149137

(57) **Abstract**

Embodiments of this application provide a synchronization signal block measurement method and an apparatus. The method may be applied to a terminal device. The method includes: The terminal device receives first information from a network device, where the first information indicates the terminal device to perform synchronization signal block SSB measurement. The terminal device performs, in a first period of the SSB measurement, the SSB measurement on a first SSB based on a first reference SSB, where the first reference SSB is autonomously determined by the terminal device. The first reference SSB based on which the terminal device performs the SSB measurement in the first period of the SSB measurement is autonomously determined by the terminal device. This can reduce a quantity of SSBs on which SSB measurement is performed, so that energy consumption overheads of the terminal device can be reduced.

## Description

This application claims priority to Chinese Patent Application No. 202310033294.7, filed with the China National Intellectual Property Administration on January 10, 2023 and entitled "SYNCHRONIZATION SIGNAL BLOCK MEASUREMENT METHOD AND APPARATUS", which is incorporated herein by reference in its entirety.

### TECHNICAL FIELD

This application relates to the field of communication technologies, and in particular, to a synchronization signal block measurement method and an apparatus.

### BACKGROUND

Currently, when listening to cell broadcast/paging, a terminal device in an idle state needs to measure a synchronization signal block (synchronization signal block, SSB) of a serving cell to select an SSB with optimal signal quality as an SSB for camping in a next period, and further needs to measure an SSB of a neighboring cell to support cell reselection. A terminal device in a connected state also needs to measure an SSB of a neighboring cell to support cell handover.

In a terrestrial communication system (for example, a 5th generation (5th generation, 5G) mobile communication system), a network device indicates, to each terminal device, that a reference time for SSB measurement is a subframe 0, and indicates, by using an offset configuration, that an offset is a time location at which an SSB index is 0. In other words, a reference SSB for the SSB measurement by the terminal device is an SSB whose index is 0 and that is determined based on the indication of the network device, and the terminal device measures all SSBs in each SSB period.

However, in a satellite communication system, coverage of a satellite is wide, a transmission distance is long, and there are a large quantity of SSBs in one SSB period. If a terminal device still performs SSB measurement based on an indication in the terrestrial communication system, that is, performs the SSB measurement on all SSBs in one SSB period, high energy consumption overheads are caused.

### SUMMARY

Embodiments of this application provide a synchronization signal block measurement method and an apparatus, to reduce energy consumption overheads of a terminal device.

According to a first aspect, an embodiment of this application provides a synchronization signal block measurement method. The method may be applied to a terminal device (for example, a device or a chip of the terminal device). In the method, the terminal device receives first information from a network device, where the first information indicates the terminal device to perform synchronization signal block SSB measurement. The terminal device performs, in a first period of the SSB measurement, the SSB measurement on a first SSB based on a first reference SSB, where the first reference SSB is autonomously determined by the terminal device.

In this embodiment of this application, the first reference SSB based on which the terminal device performs the SSB measurement in the first period of the SSB measurement is autonomously determined by the terminal device. For a terminal device in an idle state, the network device cannot learn of location information of the terminal device, and cannot learn of an SSB with good signal quality for the terminal device. In this case, if the network device indicates, to the terminal device, a reference SSB based on which SSB measurement is performed, the network device indicates, in consideration of location information of all terminal devices in an idle state, a same reference SSB to the terminal devices in the idle state. Consequently, the terminal device needs to perform SSB measurement on a large quantity of SSBs, causing high energy consumption overheads. However, if the terminal device in the idle state autonomously determines a first reference SSB based on which SSB measurement is performed, an appropriate first reference SSB can be autonomously determined while a quantity of to-be-measured SSBs is minimized, so that energy consumption overheads of the terminal device can be reduced.

For a terminal device in a connected state, when a satellite rapidly changes, a reference SSB for the terminal device constantly changes. In this case, if the network device indicates, to the terminal device, a reference SSB based on which SSB measurement is performed, the network device needs to indicate, to the terminal device for a plurality of times on different time domain resources based on a change in the satellite, a reference SSB based on which SSB measurement is performed, causing a large quantity of signaling overheads. In addition, if the network device indicates once, to the terminal device in consideration of the constant change in the reference SSB caused by the rapid change in the satellite, a reference SSB based on which SSB measurement is performed, the terminal device determines, based on the indicated reference SSB, that SSB measurement needs to be performed on a large quantity of SSBs, causing high energy consumption overheads. However, if the terminal device in the connected state autonomously determines a first reference SSB based on which SSB measurement is performed, an appropriate first reference SSB can be autonomously determined while a quantity of to-be-measured SSBs is minimized, so that energy consumption overheads of the terminal device can be reduced. In addition, in this manner, no additional interaction between the terminal device and the network device is required, so that signaling overheads can be reduced.

In an optional implementation, the first information indicates the terminal device to perform the SSB measurement based on an SSB index interval, so that the terminal device can perform the SSB measurement in the first period of the SSB measurement based on the SSB index interval by using the autonomously determined first reference SSB as a reference. In this manner, a quantity of SSBs that need to be measured by the terminal device can be reduced, so that energy consumption overheads of the terminal device can be reduced.

In an optional implementation, the terminal device may further receive second information, where the second information indicates the SSB index interval, and the SSB index interval is an integer greater than 1.

In this manner, the terminal device may perform the SSB measurement on the first SSB whose index is separated from an index of the first reference SSB by a positive integer multiple of the SSB index interval. In this case, an interval between the index of the first SSB and the index of the first reference SSB is a positive integer multiple of the SSB index interval.

The SSB index interval is an integer greater than 1. Therefore, a quantity of first SSBs determined by the terminal device based on the first reference SSB and the SSB index interval is less than a quantity of SSBs in one SSB period, so that energy consumption overheads of the terminal device can be reduced.

In an optional implementation, the terminal device may further receive third information, where the third information indicates an SSB index window, and a quantity of SSBs in the SSB index window is less than a quantity of SSBs in one SSB period.

In this manner, the terminal device may perform the SSB measurement on the first SSB whose index is in the SSB index window in which the index of the first reference SSB is a start index. In this case, the index of the first SSB is in the SSB index window in which the index of the first reference SSB is the start index.

The quantity of SSBs in the SSB index window is less than the quantity of SSBs in one SSB period. Therefore, a quantity of first SSBs determined by the terminal device based on the first reference SSB and the SSB index window is less than the quantity of SSBs in one SSB period, so that energy consumption overheads of the terminal device can be reduced.

In an optional implementation, the terminal device may further receive fourth information, where the fourth information indicates an SSB time window, and the SSB time window is less than one SSB period.

In this manner, the terminal device may perform the SSB measurement on the first SSB whose time domain position is in the SSB time window in which a time domain position of the first reference SSB is a start position. In other words, the time domain position of the first SSB is in the SSB time window in which the time domain position of the first reference SSB is the start position.

The SSB time window is less than one SSB period. Therefore, a quantity of first SSBs determined by the terminal device based on the first reference SSB and the SSB time window is less than a quantity of SSBs in one SSB period, so that energy consumption overheads of the terminal device can be reduced.

In another optional implementation, information received by the terminal device further includes two or three of second information, third information, and fourth information. For example, the terminal device may further receive the second information and the third information, the terminal device may further receive the second information and the fourth information, the terminal device may further receive the third information and the fourth information, or the terminal device may further receive the second information, the third information, and the fourth information.

When the information received by the terminal device includes two or three of the second information, the third information, and the fourth information, the terminal device determines the first SSB based on content indicated by the received information and the first reference SSB, and performs the SSB measurement on the determined first SSB.

For example, the information received by the terminal device includes the second information and the third information, and the terminal device obtains the SSB index interval and the SSB index window based on the second information and the third information. The terminal device may determine the first SSB based on the first reference SSB, the SSB index interval, and the SSB index window.

In this manner, a quantity of first SSBs determined by the terminal device is also less than a quantity of SSBs in one SSB period, so that energy consumption overheads of the terminal device can be reduced.

In an optional implementation, when the information received by the terminal device includes one or more of the second information, the third information, and the fourth information, the terminal device may further receive fifth information, where the fifth information indicates an order in which a satellite scans SSBs. In other words, when obtaining one or more of the SSB index interval, the SSB index window, and the SSB time window, the terminal device may further learn of, based on the fifth information, the order in which the satellite scans the SSBs. Further, the terminal device determines the first SSB based on the first reference SSB, the order in which the satellite scans the SSBs, and one or more of the SSB index interval, the SSB index window, and the SSB time window.

When the satellite scans the SSBs in ascending order, the index of the first SSB is greater than the index of the first reference SSB. When the satellite scans the SSBs in descending order, the index of the first SSB is less than the index of the first reference SSB.

In an optional implementation, the terminal device may further perform, in a second period of the SSB measurement, the SSB measurement on a second SSB based on a second reference SSB. The second reference SSB is determined by the terminal device based on a measurement result, in the first period, of the SSB measurement.

In this manner, the terminal device can determine, based on a measurement result in a previous period of the SSB measurement, a reference SSB based on which the SSB measurement is performed in a current period of the SSB measurement. In other words, the reference SSB based on which the terminal device performs the SSB measurement in the current period of the SSB measurement is also autonomously determined by the terminal device. This can reduce a quantity of SSBs on which the terminal device performs the SSB measurement in each period of the SSB measurement, so that energy consumption overheads of the terminal device can be reduced.

According to a second aspect, an embodiment of this application further provides a synchronization signal block measurement method. The synchronization signal block measurement method in this aspect corresponds to the synchronization signal block measurement method in the first aspect. The synchronization signal block measurement method in this aspect is described from a network device side (which may be applied to a device or a chip of the network device). In the method, the network device determines first information, and determines one or more of second information, third information, and fourth information. The network device sends the first information to a terminal device, and sends one or more of the second information, the third information, and the fourth information.

The first information indicates the terminal device to perform synchronization signal block SSB measurement based on an SSB index interval, the second information indicates the SSB index interval, the third information indicates an SSB index window, and the fourth information indicates an SSB time window. The SSB index interval is an integer greater than 1, a quantity of SSBs in the SSB index window is less than a quantity of SSBs in one SSB period, and the SSB time window is less than one SSB period.

In this embodiment of this application, the network device indicates, by using the first information, the terminal device to perform the synchronization signal block SSB measurement based on the SSB index interval, and indicates, to the terminal device by using one or more of the second information, the third information, and the fourth information, a parameter based on which a to-be-measured SSB is determined when the SSB measurement is performed based on the SSB index interval. This helps the terminal device perform the SSB measurement based on the indicated parameter and the SSB index interval.

The SSB index interval is an integer greater than 1, the quantity of SSBs in the SSB index window is less than the quantity of SSBs in one SSB period, and the SSB time window is less than one SSB period. This helps the terminal device determine, based on these parameters, a quantity of to-be-measured SSBs that is less than the quantity of SSBs in one SSB period, to help reduce energy consumption overheads of the terminal device.

In an optional implementation, when the network device sends the second information and/or the third information to the terminal device, the network device may further send fifth information, where the fifth information indicates an order in which a satellite scans SSBs. In this case, the terminal device further determines a to-be-measured SSB with reference to the order in which the satellite scans the SSBs.

According to a third aspect, an embodiment of this application further provides a communication apparatus. The communication apparatus has some or all of functions of implementing the terminal device in the first aspect, or has some or all of functions of implementing the network device in the second aspect. For example, the communication apparatus may have functions in some or all of embodiments of the terminal device in the first aspect of embodiments of this application, or may have functions of independently implementing any one of embodiments of this application. The function may be implemented by hardware, or may be implemented by hardware executing corresponding software. The hardware or the software includes one or more units or modules corresponding to the functions.

In a possible design, a structure of the communication apparatus may include a processing unit and a communication unit. The processing unit is configured to support the communication apparatus in performing a corresponding function in the foregoing method. The communication unit is configured to support communication between the communication apparatus and another communication apparatus. The communication apparatus may further include a storage unit. The storage unit is configured to be coupled to the processing unit and the communication unit, and stores program instructions and data that are necessary for the communication apparatus.

In an implementation, the communication apparatus includes a processing unit and a communication unit.

The communication unit is configured to receive first information from a network device, where the first information indicates a terminal device to perform synchronization signal block SSB measurement.

The processing unit is configured to perform, in a first period of the SSB measurement, the SSB measurement on a first SSB based on a first reference SSB, where the first reference SSB is autonomously determined by the terminal device.

In addition, for another optional implementation of the communication apparatus in this aspect, refer to related content of the first aspect. Details are not described herein again.

In another implementation, the communication apparatus includes a processing unit and a communication unit. The communication unit is configured to receive and send signaling/signals.

The processing unit is configured to determine first information, and determine one or more of second information, third information, and fourth information.

The communication unit is configured to send the first information to a terminal device, and send one or more of the second information, the third information, and the fourth information.

The first information indicates the terminal device to perform synchronization signal block SSB measurement based on an SSB index interval, the second information indicates the SSB index interval, the third information indicates an SSB index window, and the fourth information indicates an SSB time window. The SSB index interval is an integer greater than 1, a quantity of SSBs in the SSB index window is less than a quantity of SSBs in one SSB period, and the SSB time window is less than one SSB period.

In addition, for another optional implementation of the communication apparatus in this aspect, refer to related content of the second aspect. Details are not described herein again.

In an example, the communication unit may be a transceiver or a communication interface, the storage unit may be a memory, and the processing unit may be a processor.

In an implementation, the communication apparatus includes a processor and a transceiver.

The transceiver is configured to receive first information from a network device, where the first information indicates a terminal device to perform synchronization signal block SSB measurement.

The processor is configured to perform, in a first period of the SSB measurement, the SSB measurement on a first SSB based on a first reference SSB, where the first reference SSB is autonomously determined by the terminal device.

In addition, for another optional implementation of the communication apparatus in this aspect, refer to related content of the first aspect. Details are not described herein again.

In another implementation, the communication apparatus includes a processor and a transceiver.

The processor is configured to determine first information, and determine one or more of second information, third information, and fourth information.

The transceiver is configured to send the first information to a terminal device, and send one or more of the second information, the third information, and the fourth information.

The first information indicates the terminal device to perform synchronization signal block SSB measurement based on an SSB index interval, the second information indicates the SSB index interval, the third information indicates an SSB index window, and the fourth information indicates an SSB time window. The SSB index interval is an integer greater than 1, a quantity of SSBs in the SSB index window is less than a quantity of SSBs in one SSB period, and the SSB time window is less than one SSB period.

In addition, for another optional implementation of the communication apparatus in this aspect, refer to related content of the second aspect. Details are not described herein again.

In another implementation, the communication apparatus is a chip or a chip system. The processing unit may alternatively be represented as a processing circuit or a logic circuit. The communication unit may be an input/output interface, an interface circuit, an output circuit, an input circuit, a pin, a related circuit, or the like on the chip or the chip system.

In an implementation process, the processor may be configured to perform, for example, but not limited to, baseband-related processing; and the transceiver may be configured to perform, for example, but not limited to, radio frequency receiving and sending. The foregoing components may be separately disposed on chips that are independent of each other, or at least some or all of the components may be disposed on a same chip. For example, the processor may be divided into an analog baseband processor and a digital baseband processor. The analog baseband processor and the transceiver may be integrated on a same chip, and the digital baseband processor may be disposed on an independent chip. With continuous development of an integrated circuit technology, an increasing quantity of components may be integrated on a same chip. For example, the digital baseband processor and a plurality of application processors (for example, but not limited to, a graphics processing unit and a multimedia processor) may be integrated on a same chip. Such a chip may be referred to as a system on a chip (system on a chip, SoC). Whether the components are separately disposed on different chips or integrally disposed on one or more chips usually depends on a requirement of a product design. Implementation forms of the foregoing components are not limited in embodiments of this application.

According to a fourth aspect, an embodiment of this application further provides a processor, configured to perform the foregoing methods. In a process of performing these methods, a process of sending the foregoing information and a process of receiving the foregoing information in the foregoing methods may be understood as a process of outputting the foregoing information by the processor and a process of receiving the foregoing input information by the processor. When outputting the information, the processor outputs the information to a transceiver, so that the transceiver transmits the information. After the information is outputted by the processor, other processing may further need to be performed on the information before the information arrives at the transceiver. Similarly, during receiving of the input information by the processor, the transceiver receives the information, and inputs the information to the processor. Further, after the transceiver receives the information, other processing may need to be performed on the information before the information is input to the processor.

Unless otherwise specified, or if operations such as sending and receiving related to the processor do not contradict an actual function or internal logic of the operations in related descriptions, all the operations may be more generally understood as operations such as outputting, receiving, and inputting of the processor, instead of operations of sending and receiving directly performed by a radio frequency circuit and an antenna.

In an implementation process, the processor may be a processor specially configured to perform the methods, or a processor, for example, a general-purpose processor, that executes computer instructions in a memory to perform the methods. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in embodiments of this application.

According to a fifth aspect, an embodiment of this application further provides a communication system. The system includes a network device and a satellite. Optionally, the system further includes a terminal device. In another possible design, the system may further include another device that interacts with the terminal device, the network device, and the satellite.

According to a sixth aspect, an embodiment of this application provides a computer-readable storage medium, configured to store instructions. When the instructions are run by a computer, the method according to the first aspect or the second aspect is implemented.

According to a seventh aspect, an embodiment of this application further provides a computer program product including instructions. When the computer program product is run on a computer, the method according to the first aspect or the second aspect is implemented.

According to an eighth aspect, an embodiment of this application provides a chip system. The chip system includes a processor and an interface. The interface is configured to obtain a program or instructions. The processor is configured to invoke the program or the instructions to implement or support a terminal device in implementing functions in the first aspect, or implement or support a network device in implementing functions in the second aspect, for example, determining or processing at least one of data and information in the foregoing methods. In a possible design, the chip system further includes a memory. The memory is configured to store program instructions and data that are necessary for a terminal. The chip system may include a chip, or may include a chip and another discrete component.

According to a ninth aspect, an embodiment of this application provides a communication apparatus, including a processor configured to execute a computer program or executable instructions stored in a memory. When the computer program or the executable instructions are executed, the apparatus is enabled to perform the method according to possible implementations of the first aspect or the second aspect.

In a possible implementation, the processor and the memory are integrated together.

In another possible implementation, the memory is located outside the communication apparatus.

For beneficial effects of the third aspect to the ninth aspect, refer to the beneficial effects of the first aspect and the second aspect. Details are not described herein again.

### BRIEF DESCRIPTION OF DRAWINGS

FIG. 1 is a diagram of a system architecture of an NTN-based RAN according to an embodiment of this application;
FIG. 2 is a diagram of another system architecture of an NTN-based RAN according to an embodiment of this application;
FIG. 3 is a diagram of still another system architecture of an NTN-based RAN according to an embodiment of this application;
FIG. 4 is a diagram of still another system architecture of an NTN-based RAN according to an embodiment of this application;
FIG. 5 is a diagram of beam coverage in a satellite movement scenario according to an embodiment of this application;
FIG. 6 is a diagram of beam coverage in another satellite movement scenario according to an embodiment of this application;
FIG. 7 is a diagram of a frame structure of SSBs according to an embodiment of this application;
FIG. 8 is an interaction diagram of a synchronization signal block measurement method according to an embodiment of this application;
FIG. 9 is a diagram in which a satellite scans SSBs according to an embodiment of this application;
FIG. 10 is another diagram in which a satellite scans SSBs according to an embodiment of this application;
FIG. 11 is an interaction diagram of another synchronization signal block measurement method according to an embodiment of this application;
FIG. 12 is an interaction diagram of still another synchronization signal block measurement method according to an embodiment of this application;
FIG. 13 is an interaction diagram of still another synchronization signal block measurement method according to an embodiment of this application;
FIG. 14 is a diagram of a structure of a communication apparatus according to an embodiment of this application; and
FIG. 15 is a diagram of a structure of another communication apparatus according to an embodiment of this application.

### DESCRIPTION OF EMBODIMENTS

The following clearly and completely describes technical solutions in embodiments of this application with reference to accompanying drawings in embodiments of this application.

For better understanding of a synchronization signal block measurement method disclosed in embodiments of this application, a system to which embodiments of this application are applicable is described.

Embodiments of this application may be applied to a system architecture of a radio access network (wireless access network, RAN) based on a non-terrestrial network (non-terrestrial network, NTN). The following uses a 5th generation (5th generation, 5G) mobile communication system as an example to describe several common system architectures of an NTN-based RAN.

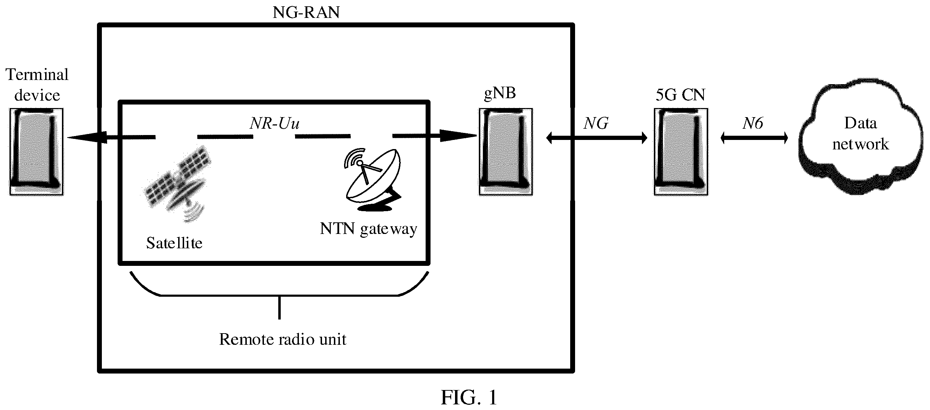

FIG. 1 is a diagram of a system architecture of an NTN-based RAN. As shown in FIG. 1, the system architecture of the RAN carries a transparent (transparent) satellite (satellite), and the system architecture further includes a terminal device, an NTN gateway (gateway), a 5G base station (gNB), a 5G core network, and a data network (data network, DN). A link between the NTN gateway and the satellite is referred to as a feeder link (feeder link), a link between the satellite and the terminal device is referred to as a service link (service link), N6 represents an interface between a user plane function (User Plane Function, UPF) of the 5G core network and the DN, NG represents an interface between the gNB and the 5G core network, a new radio (New Radio, NR)-Uu interface represents an interface between the terminal device and the gNB, and the satellite and the NTN gateway form a remote radio unit (remote radio unit).

In the system architecture shown in FIG. 1, the satellite has a function of implementing frequency conversion and wireless frequency amplification, and is equivalent to an analog radio frequency repeater. Therefore, from the feeder link to the service link, the satellite forwards an NR-Uu interface signal, and the NR-Uu interface signal is a signal between the terminal device and the gNB. Conversely, from the service link to the feeder link, the satellite forwards the NR-Uu interface signal to the gNB through the NTN gateway. In other words, the NTN gateway is used for communication between the satellite and the 5G base station, is a transport network layer node, and supports all necessary functions of forwarding the NR-Uu interface signal. In addition, different satellites may be connected to a same terrestrial 5G base station through the NTN gateway.

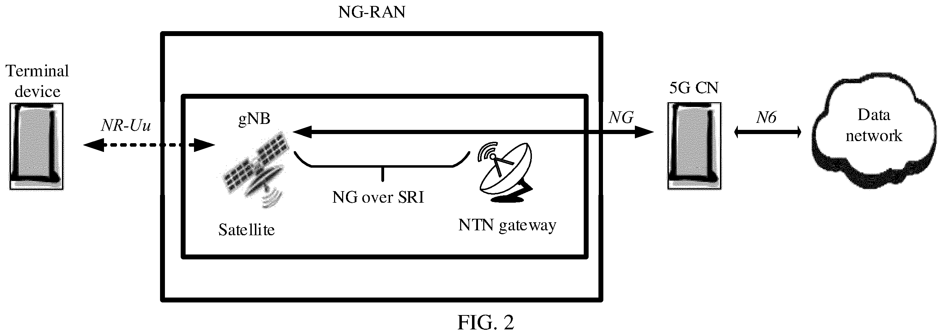

FIG. 2 is a diagram of another system architecture of an NTN-based RAN. As shown in FIG. 2, the system architecture includes a terminal device, a satellite, an NTN gateway, a 5G core network, and a data network DN. A 5G base station is deployed on the satellite. In this case, the satellite may also be referred to as a satellite base station. An NR-Uu interface signal is transmitted over a service link between the terminal device and the satellite, a satellite radio interface (Satellite Radio Interface, SRI) signal is transmitted over a feeder link between the NTN gateway and the satellite, and the SRI signal is a signal between the NTN gateway and the satellite. When transmitted from the satellite base station to the 5G core network, an NG interface signal is transmitted by the satellite base station to the NTN gateway through an SRI, and then forwarded by the NTN gateway to the terrestrial 5G core network. A process of transmitting an NG interface signal from the 5G core network to the satellite base station is similar, and details are not described again.

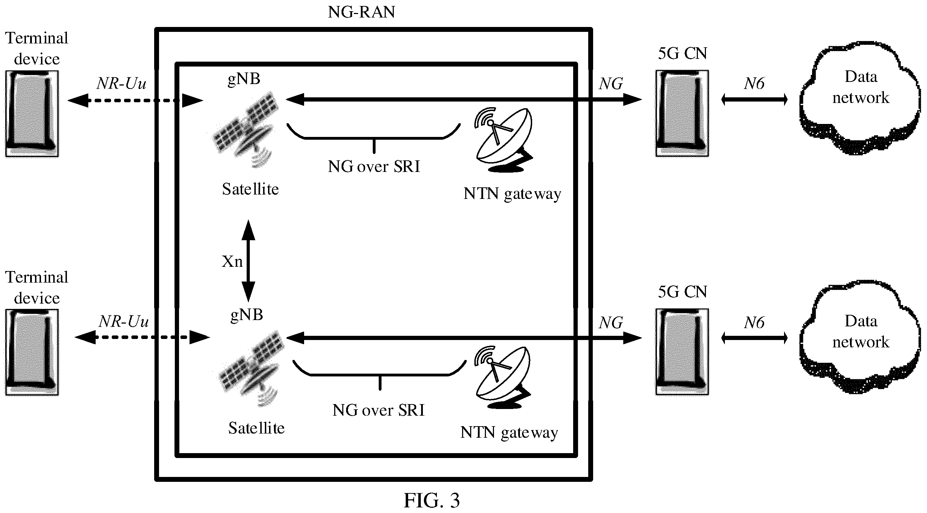

FIG. 3 is a diagram of still another system architecture of an NTN-based RAN. As shown in FIG. 3, a difference from the system architecture shown in FIG. 2 lies in that there is an inter-satellite link (inter-satellite link, ISL) between satellites in the system architecture in FIG. 3. A terminal device served by a satellite base station can access a 5G core network over the ISL, and different satellite base stations may be connected to a same terrestrial 5G core network.

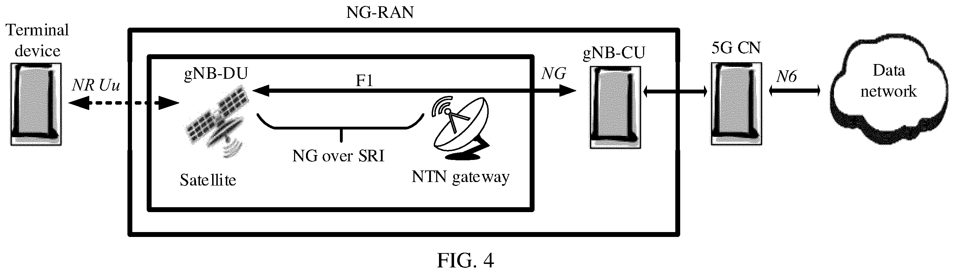

FIG. 4 is a diagram of still another system architecture of an NTN-based RAN. As shown in FIG. 4, in the system architecture, a central unit (Centralized Unit, CU) and a distributed unit (Distributed Unit, DU) of a gNB are separated, and the distributed unit DU (gNB-DU) of the 5G base station is deployed on a satellite. DUs deployed on different satellites may be connected to a same terrestrial CU. An NR-Uu interface signal is transmitted over a service link between a terminal device and the satellite, and an SRI signal is transmitted over a feeder link between an NTN gateway and the satellite.

The system architecture of the NTN-based RAN to which embodiments of this application are applicable includes but is not limited to the system architectures shown in FIG. 1 to FIG. 4.

When the NTN in embodiments of this application is applied to an evolved 6th generation (6th generation, 6G) mobile communication system, a system architecture of an NTN-based RAN is similar to the system architectures shown in FIG. 1 to FIG. 4. A difference lies in that when the NTN is applied to the evolved 6G mobile communication system, in the system architecture of the NTN-based RAN, a base station communicating with a terminal device is a 6G base station, a CN communicating with the base station is a 6G CN, and an interface in the system is a 6G interface.

It may be understood that a communication system to which embodiments of this application are applicable includes a network device and a satellite. The network device may be deployed on the satellite. Optionally, the system may further include a terminal device. In another possible design, the system may further include another device that interacts with the terminal device, the network device, and the satellite.

It may be understood that an NTN communication system to which embodiments of this application are applicable includes but is not limited to a narrow band-internet of things (narrow band-internet of things, NB-IoT) system, a long term evolution (long term evolution, LTE) system, a 5G/6G mobile communication system, a wireless fidelity (wireless fidelity, Wi-Fi) system, and the like.

Embodiments of this application are further applicable to the following application scenarios: enhanced mobile broadband (enhanced mobile broadband, eMBB), ultra-reliable low latency communication (ultra-reliable low latency communication, URLLC), and massive machine type of communication (massive machine type of communication, mMTC).

In embodiments of this application, the network device is a device having a wireless transceiver function, is configured to communicate with the terminal device, and may be an evolved NodeB (evolved NodeB, eNB or eNodeB) in LTE, a base station in a 5G/6G network, a base station in a future evolved public land mobile network (public land mobile network, PLMN), a broadband network gateway (broadband network gateway, BNG), an aggregation switch, a non-3rd generation partnership project (3rd generation partnership project, 3GPP) access device, or the like. Optionally, the network device in embodiments of this application may include various forms of base stations, for example, a macro base station, a micro base station (also referred to as a small cell), a relay station, an access point, a future device for implementing a function of a base station, an access point (access point, AP) in a Wi-Fi system, a transmitting and receiving point (transmitting and receiving point, TRP), a transmitting point (transmitting point, TP), a mobile switching center, a device that implements a function of a base station and that is in device-to-device (device-to-device, D2D), vehicle-to-everything (vehicle-to-everything, V2X), or machine-to-machine (machine-to-machine, M2M) communication, a device that implements a function of a base station and that is in an evolved communication system after 5G, integrated access and backhaul (integrated access and backhaul, IAB), a central unit CU and a distributed unit DU in a cloud radio access network (cloud radio access network, C-RAN) system, and a network device in an NTN communication system, that is, may be deployed on a high-altitude platform or a satellite, or may be various devices that form an access node, such as an active antenna unit (active antenna unit, AAU) and a baseband unit (baseband unit, BBU). This is not limited in embodiments of this application.

The network device may communicatively interact with a core network device, to provide a communication service for the terminal device. The core network device is, for example, a device in a core network of a 5G network. As a bearer network, the core network provides an interface for a data network, provides communication connection, authentication, management, and policy control for a terminal, bearers a data service, and the like.

The terminal device in embodiments of this application may include various devices having a wireless communication function, for example, a handheld device, a vehicle-mounted device, a wearable device, a computing device, or another processing device connected to a wireless modem. The terminal device may also be referred to as a terminal. The terminal device may alternatively be user equipment (user equipment, UE), an access terminal, a subscriber unit (subscriber unit), a user agent, a cellular phone (cellular phone), a smartphone (smartphone), a wireless data card, a personal digital assistant (personal digital assistant, PDA) computer, a tablet computer, a wireless modem (modem), a handheld device (handset), a laptop computer (laptop computer), a smart point of sale (point of sale, POS), a customer-premises equipment (customer-premises equipment, CPE), a machine type communication (machine type communication, MTC) terminal, a communication device mounted on a high-altitude airplane, a wearable device, an unmanned aerial vehicle, a robot, a terminal in D2D, a terminal in vehicle-to-everything (vehicle-to-everything, V2X), a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in a future communication network, or the like. This is not limited in this application.

In embodiments disclosed in this application, various aspects, embodiments, or features of this application are presented by describing a system including a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In a satellite communication scenario, when a satellite moves at a high speed, a beam, measured by a terminal device, carrying an optimal synchronization signal block (synchronization signal block, SSB) changes in real time. The optimal SSB is an SSB with signal quality greater than a preset threshold in a plurality of SSBs.

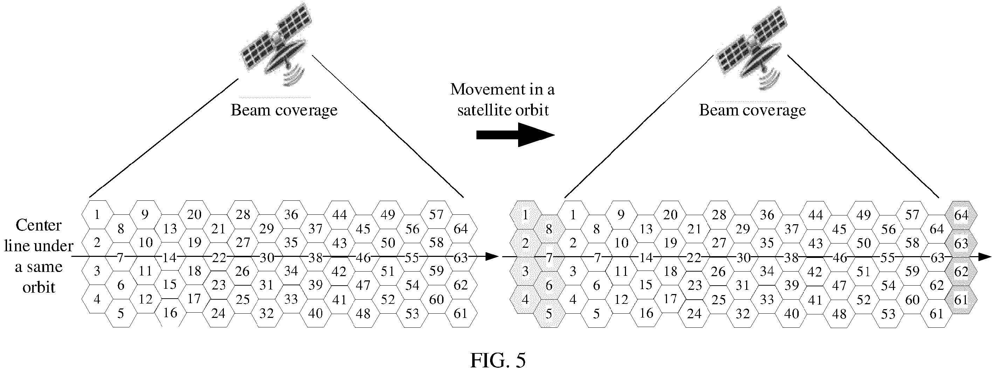

For example, FIG. 5 is a diagram of beam coverage in a satellite movement scenario. As shown in FIG. 5, beams covered by a satellite before movement include beams whose indexes are 1 to 64, and beams covered by the satellite after high-speed movement are still beams whose indexes are 1 to 64. In other words, beam coverage of the satellite does not change before and after the satellite moves. However, for a terrestrial terminal device, coverage, of the satellite, in which the terminal device is located changes. Therefore, a beam range in which the terminal device is located changes, and further an optimal beam for the terminal device changes. For example, after the satellite moves, the terminal device switches out of beams whose indexes are shown in a left shaded part in FIG. 5 (that is, indexes are 1 to 8), and switches into beams whose indexes are shown in a right shaded part (that is, indexes are 61 to 64).

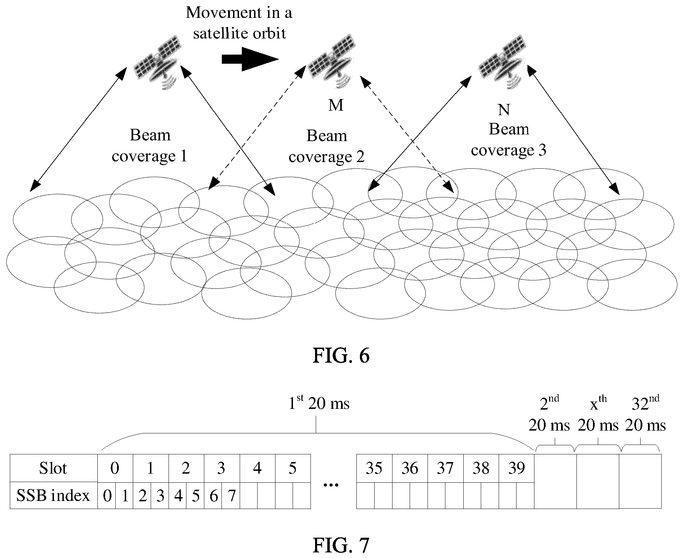

For example, FIG. 6 is a diagram of beam coverage in another satellite movement scenario. As shown in FIG. 6, beam coverage of a satellite before movement is beam coverage 1. When the satellite moves to a point M, beam coverage of the satellite is beam coverage 2. When the satellite moves to a point N, beam coverage of the satellite is beam coverage 3. In different beam coverage, beams covered by the satellite are different, and therefore an optimal beam for a terminal device changes.

It can be learned that, in a satellite communication scenario, as a location of a satellite changes, an optimal beam for a terminal device changes, and an optimal SSB for the terminal device also changes. The terminal device needs to perform SSB measurement in real time.

In a terrestrial communication system, a network device indicates, to each terminal device, that a reference time for SSB measurement is a subframe 0, and indicates, by using an offset configuration, that an offset is a time location at which an SSB index is 0. In other words, a reference SSB for the SSB measurement by the terminal device is an SSB whose index is 0 and that is determined based on the indication of the network device, and the terminal device measures all SSBs in each SSB period. However, in a satellite communication system, coverage of a satellite is wide, a transmission distance is long, and there are a large quantity of SSBs in one SSB period. In this case, one SSB period is long. An NR communication system is used as an example. Eight SSBs are measured every 20 ms, and it is assumed that there are 256 SSBs in a low-orbit satellite scenario. In this case, a frame structure of SSBs in one SSB period may be shown in FIG. 7. According to the frame structure shown in FIG. 7, it can be calculated that one SSB period is 640 ms. If a terminal device still performs SSB measurement on all SSBs in each SSB period based on an indication in the terrestrial communication system, high energy consumption overheads are caused.

For example, when a terminal device in an idle state performs SSB measurement on all SSBs in each SSB period in real time to select an optimal SSB as an SSB for camping in a next period, sleep time of the terminal device is short, and energy consumption overheads are high. In addition, when the terminal device in the idle state further measures all SSBs in each SSB period of a neighboring cell to support cell reselection, a measurement period of the terminal device is long, and energy consumption overheads are high.

For another example, when a terminal device in a connected state measures all SSBs in each SSB period of a neighboring cell to select a cell for handover, high energy consumption overheads are caused. In addition, frequencies of different cells differ greatly, and the terminal device in the connected state cannot perform a service in a serving cell when performing neighboring cell measurement. Consequently, when the terminal device in the connected state performs SSB measurement for a long time, a communication service in the current cell is affected.

An embodiment of this application provides a synchronization signal block measurement method 100. In the synchronization signal block measurement method 100, a network device determines first information. The first information indicates a terminal device to perform synchronization signal block SSB measurement. The network device sends the first information to the terminal device. The terminal device performs, in a first period of the SSB measurement, the SSB measurement on a first SSB based on a first reference SSB. The first SSB is autonomously determined by the terminal device.

For a terminal device in an idle state, the network device cannot learn of location information of the terminal device, and cannot learn of an SSB with good signal quality for the terminal device. In this case, if the network device indicates, to the terminal device, a reference SSB based on which SSB measurement is performed, the network device indicates, in consideration of location information of all terminal devices in an idle state, a same reference SSB to the terminal devices in the idle state. Consequently, each terminal device needs to perform SSB measurement on a large quantity of SSBs, causing high energy consumption overheads. However, if the terminal device in the idle state autonomously determines a first reference SSB based on which SSB measurement is performed, an appropriate first reference SSB can be autonomously determined while a quantity of to-be-measured SSBs is minimized, so that energy consumption overheads of the terminal device can be reduced.

For a terminal device in a connected state, when a satellite rapidly changes, a reference SSB for the terminal device constantly changes. In this case, if the network device indicates, to the terminal device, a reference SSB based on which SSB measurement is performed, the network device needs to indicate, to the terminal device for a plurality of times on different time domain resources based on a change in the satellite, a reference SSB based on which SSB measurement is performed, causing a large quantity of signaling overheads. In addition, if the network device indicates once, to the terminal device in consideration of the constant change in the reference SSB caused by the rapid change in the satellite, a reference SSB based on which SSB measurement is performed, the terminal device determines, based on the indicated reference SSB, that SSB measurement needs to be performed on a large quantity of SSBs, causing high energy consumption overheads. However, if the terminal device in the connected state autonomously determines a first reference SSB based on which SSB measurement is performed, an appropriate first reference SSB can be autonomously determined while a quantity of to-be-measured SSBs is minimized, so that energy consumption overheads of the terminal device can be reduced. In addition, in this manner, no additional interaction between the terminal device and the network device is required, so that signaling overheads can be reduced.

An embodiment of this application further provides a synchronization signal block measurement method 200. In the synchronization signal block measurement method 200, a network device determines first information and second information. The first information indicates a terminal device to perform SSB measurement based on an SSB index interval, the second information indicates the SSB index interval, and the SSB index interval is an integer greater than 1. The network device sends the first information and the second information to the terminal device. The terminal device determines a first SSB based on the SSB index interval and an autonomously determined first reference SSB. The terminal device performs, in a first period of the SSB measurement, the SSB measurement on the first SSB. In this manner, the first SSB determined by the terminal device is a part of SSBs in one SSB period, so that energy consumption overheads of the terminal device can be reduced.

An embodiment of this application further provides a synchronization signal block measurement method 300. In the synchronization signal block measurement method 300, a network device determines first information and third information. The first information indicates a terminal device to perform SSB measurement based on an SSB index interval, the third information indicates an SSB index window, and a quantity of SSBs in the SSB index window is less than a quantity of SSBs in one SSB period. The network device sends the first information and the third information to the terminal device. The terminal device determines a first SSB based on the SSB index window and an autonomously determined first reference SSB. The terminal device performs, in a first period of the SSB measurement, the SSB measurement on the first SSB. In this manner, the first SSB determined by the terminal device is also a part of SSBs in one SSB period, so that energy consumption overheads of the terminal device can be reduced.

An embodiment of this application further provides a synchronization signal block measurement method 400. In the synchronization signal block measurement method 400, a network device determines first information and fourth information. The first information indicates a terminal device to perform SSB measurement based on an SSB index interval, the fourth information indicates an SSB time window, and the SSB time window is less than one SSB period. The network device sends the first information and the fourth information to the terminal device. The terminal device determines a first SSB based on the SSB time window and an autonomously determined first reference SSB. The terminal device performs, in a first period of the SSB measurement, the SSB measurement on the first SSB. In this manner, the determined first SSB is also a part of SSBs in one SSB period, so that energy consumption overheads of the terminal device can be reduced.

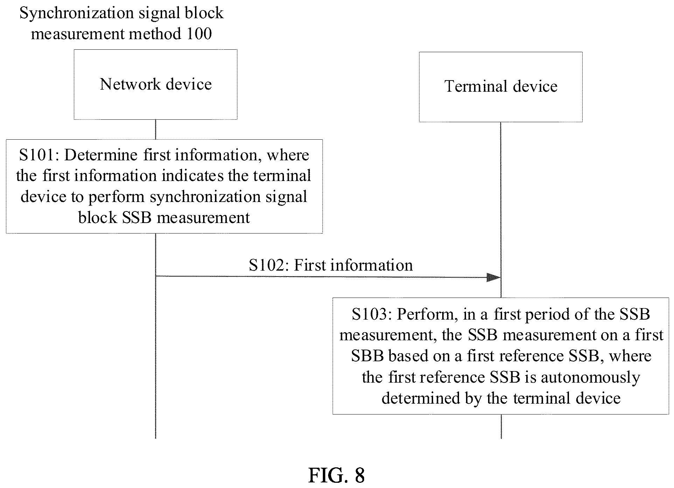

An embodiment of this application provides a synchronization signal block measurement method 100. FIG. 8 is an interaction diagram of the synchronization signal block measurement method 100. The synchronization signal block measurement method 100 is described from the perspective of interaction between a network device and a terminal device. The synchronization signal block measurement method 100 includes but is not limited to the following steps.

S101: The network device determines first information, where the first information indicates the terminal device to perform synchronization signal block SSB measurement.

It may be understood that the network device indicates, by using the first information, the terminal device to perform the SSB measurement, so that the terminal device performs the SSB measurement in real time when a satellite moves.

S102: The network device sends the first information to the terminal device. Correspondingly, the terminal device receives the first information from the network device.

S103: The terminal device performs, in a first period of the SSB measurement, the SSB measurement on a first SBB based on a first reference SSB, where the first reference SSB is autonomously determined by the terminal device.

The first period of the SSB measurement may be configured by the network device for the terminal device. For example, the first period of the SSB measurement is configured by the network device for the terminal device by using the first information. The first period of the SSB measurement may also be understood as a 1^{st} measurement period in which the terminal device performs the SSB measurement.

It may be understood that, for a terminal device in an idle state, when performing SSB measurement on an SSB of a serving cell, the terminal device may determine an SSB for initial synchronization with the serving cell as a first reference SSB, or determine an SSB with signal quality greater than a preset threshold in a plurality of measured SSBs as a first reference SSB. The terminal device performing the initial synchronization with the serving cell means that when the terminal device accesses a network for the first time, the terminal device synchronizes information such as time and a frequency with a network device of the serving cell, to obtain a system message. When performing SSB measurement on an SSB of a neighboring cell, the terminal device may determine an SSB for initial synchronization with the neighboring cell as a first reference SSB. Alternatively, the network device indicates, to the terminal device, a deviation between the first reference SSB based on which the SSB measurement is performed on the SSB of the serving cell and a first reference SSB based on which SSB measurement is performed on an SSB of the neighboring cell, and the terminal device determines, based on the first reference SSB based on which the SSB measurement is performed on the SSB of the serving cell and the deviation, the first reference SSB based on which the SSB measurement is performed on the SSB of the neighboring cell.

For an implementation in which a terminal device in a connected state autonomously determines a first reference SSB based on which SSB measurement is performed on an SSB of a serving cell and a first reference SSB based on which SSB measurement is performed on an SSB of a neighboring cell, refer to the foregoing implementation in which the terminal device in the idle state determines the first reference SSB. Details are not described again.

In addition, a first reference SSB based on which the terminal device in the connected state performs SSB measurement on an SSB of the neighboring cell may alternatively be indicated by a network device to the terminal device. For example, a neighboring base station of the terminal device sends SSB coverage in which the terminal device is located to a source base station of the serving cell. The source base station determines, based on the SSB coverage, of the neighboring base station, in which the terminal device is located, a first reference SSB based on which the terminal device performs SSB measurement on an SSB of the neighboring cell, and sends the first reference SSB to the terminal device.

For another example, the source base station may send location information of the terminal device to the neighboring base station, and the neighboring base station determines, based on a location of the terminal device and SSB coverage of the neighboring base station, a first reference SSB based on which the terminal device performs SSB measurement on an SSB of the neighboring cell. Then, the neighboring base station sends the determined first reference SSB to the source base station, and the source base station forwards the first reference SSB to the terminal device, so that the terminal device obtains the first reference SSB based on which the SSB measurement is performed on the SSB of the neighboring cell.

It can be learned that both the terminal device in the idle state and the terminal device in the connected state may autonomously determine the first SSB based on which the SSB measurement is performed on the SSB of the serving cell and the first reference SSB based on which the SSB measurement is performed on the SSB of the neighboring cell. An implementation in which the terminal device autonomously determines the first reference SSB includes but is not limited to the foregoing implementations.

It may be understood that the terminal device receives the first information indicating to perform the SSB measurement, and performs, in the first period of the SSB measurement, the SSB measurement on the first SSB based on the autonomously determined first reference SSB.

For the terminal device in the idle state, the network device cannot learn of location information of the terminal device, and cannot learn of an SSB with good signal quality for the terminal device. In this case, if the network device indicates, to the terminal device, a reference SSB based on which SSB measurement is performed, the network device indicates, in consideration of location information of all terminal devices in an idle state, a same reference SSB to the terminal devices in the idle state. Consequently, each terminal device needs to perform SSB measurement on a large quantity of SSBs, causing high energy consumption overheads. For example, the network device indicates, to the terminal device in the idle state, that the reference SSB based on which the SSB measurement is performed is an SSB whose index is 0. When the reference SSB is the SSB whose index is 0, the location information of all the terminal devices in the idle state may be considered, and each terminal device in the idle state needs to perform SSB measurement starting from the SSB whose index is 0. In this case, for a terminal device in an NTN network, the terminal device needs to perform SSB measurement for a long time, causing high energy consumption overheads of the terminal device.

However, if the terminal device in the idle state autonomously determines a first reference SSB based on which SSB measurement is performed, an appropriate first reference SSB can be autonomously determined while a quantity of to-be-measured SSBs is minimized, so that energy consumption overheads of the terminal device can be reduced. For example, the terminal device in the idle state determines an SSB for initial synchronization in a neighboring cell as the first reference SSB, and the terminal device performs the SSB measurement starting from the SSB for the initial synchronization in the neighboring cell. In this case, even if there are a large quantity of SSBs in one SSB period, the terminal device performs the SSB measurement on a part of SSBs in one SSB period, so that energy consumption overheads of the terminal device can be reduced. For example, one SSB period includes 256 SSBs, and the SSB used by the terminal device for the initial synchronization in the neighboring cell is an SSB whose index is 100. In this case, in a first period of the SSB measurement, the terminal device may perform the SSB measurement starting from the SSB whose index is 100. In comparison with performing SSB measurement by the terminal device on the 256 SSBs in the SSB period, energy consumption overheads of the terminal device can be reduced.

For the terminal device in the connected state, when the satellite rapidly changes, a reference SSB for the terminal device constantly changes. In this case, if the network device indicates, to the terminal device, a reference SSB based on which SSB measurement is performed, the network device needs to indicate, to the terminal device for a plurality of times on different time domain resources based on a change in the satellite, a reference SSB based on which SSB measurement is performed, causing a large quantity of signaling overheads. For example, when the satellite is at a location 1, the network device determines, based on beam coverage, of the satellite, in which the terminal device is located, a reference SSB-1 based on which the terminal device performs SSB measurement, and sends the reference SSB-1 to the terminal device in a slot 1. When the satellite is at a location 2 after rapid movement, the network device determines, based on latest beam coverage, of the satellite, in which the terminal device is located, a reference SSB-2 based on which the terminal device performs SSB measurement, and sends the reference SSB-2 to the terminal device in a slot 2.

In addition, if the network device indicates once, to the terminal device in consideration of the constant change in the reference SSB caused by the rapid change in the satellite, a reference SSB based on which SSB measurement is performed, the terminal device determines, based on the indicated reference SSB, that SSB measurement needs to be performed on a large quantity of SSBs, causing high energy consumption overheads.

However, if the terminal device in the connected state autonomously determines a first reference SSB based on which SSB measurement is performed, an appropriate first reference SSB can be autonomously determined while a quantity of to-be-measured SSBs is minimized, so that energy consumption overheads of the terminal device can be reduced. In addition, in this manner, there is no need for the network device to indicate a reference SSB to the terminal device by using signaling. In other words, no additional interaction between the terminal device and the network device is required, so that signaling overheads can be reduced.

In an optional implementation, the first information indicates the terminal device to perform the SSB measurement based on an SSB index interval. In this manner, the terminal device does not perform the SSB measurement on an SSB on each slot resource, but performs the SSB measurement based on the SSB index interval. This helps reduce a quantity of SSBs on which the terminal device performs SSB measurement, to help reduce energy consumption overheads of the terminal device.

In an optional implementation, when the first information indicates the terminal device to perform the SSB measurement based on the SSB index interval, the network device may further determine second information, and send the second information to the terminal device. The second information indicates the SSB index interval, and the SSB index interval is an integer greater than 1. Correspondingly, the terminal device may further receive the second information from the network device.

In an optional implementation, the terminal device determines the second information based on an orbit direction of the satellite and an arrangement direction of indexes of SSBs. The orbit direction of the satellite is a movement direction of the satellite, and the arrangement direction of the indexes of the SSBs is a direction in which the indexes of the SSBs are sequentially arranged in ascending order. A quantity of SSBs in one SSB period and an arrangement direction of indexes of SSBs in one SSB period may be predefined.

It may be understood that when the orbit direction of the satellite is perpendicular to the arrangement direction of the indexes of the SSBs, the network device determines the second information, that is, determines the SSB index interval. A specific value of the SSB index interval may be determined by the network device based on an arrangement rule of the indexes of the SSBs.

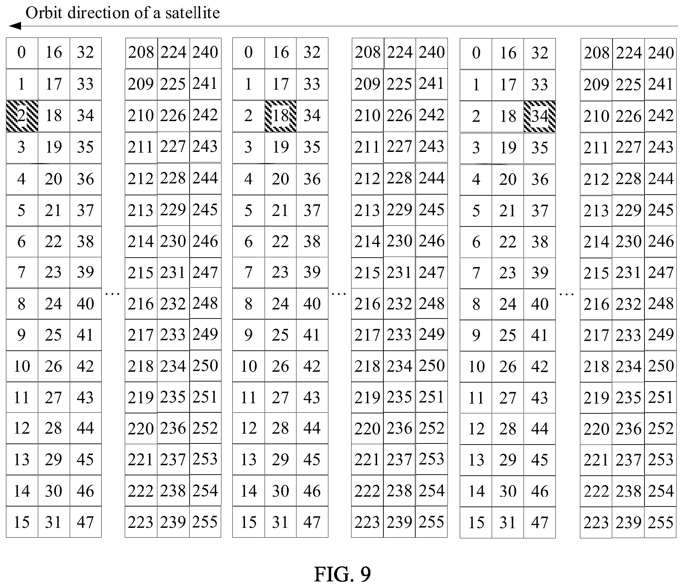

For example, FIG. 9 is a diagram in which a satellite scans SSBs. As shown in FIG. 9, one SSB period includes 256 SSBs, an orbit direction of the satellite points leftward horizontally, and when indexes of the SSBs are sequentially arranged in ascending order, an arrangement direction of the indexes points downward vertically. In other words, the orbit direction of the satellite is perpendicular to the arrangement direction of the indexes of the SSBs. It can be learned from FIG. 9 that when the orbit direction of the satellite is perpendicular to the arrangement direction of the indexes of the SSBs, SSB coverage, of the satellite, in which the terminal device is located moves rightward horizontally. If a current SSB with good signal quality for the terminal device is an SSB whose index is 2, after the satellite moves, an SSB with good signal quality for the terminal device may be an SSB whose index is 18, 34, 50, or the like. In this case, the network device may indicate, by using the SSB index interval, the terminal device to perform the SSB measurement on an SSB that is separated from the current SSB with good signal quality by a plurality of SSBs. In other words, the network device may indicate the SSB index interval to the terminal device, so that the terminal device performs the SSB measurement on an SSB whose index is separated from the index of the current SSB with good signal quality by a positive integer multiple of the SSB index interval. According to the arrangement rule of the indexes of the SSBs shown in FIG. 9, the network device may determine that the SSB index interval is 16.

The network device indicates the SSB index interval to the terminal device, so that the terminal device can perform, in the first period of the SSB measurement, the SSB measurement on the first SSB determined based on the first reference SSB and the SSB index interval. The SSB index interval is an integer greater than 1. Therefore, the first SSB determined by the terminal device based on the first reference SSB and the SSB index interval is not all SSBs in one SSB period, but a part of SSBs in one SSB period. This can reduce a quantity of SSBs on which the terminal device performs SSB measurement, so that energy consumption overheads of the terminal device can be reduced.

In another optional implementation, when the first information indicates the terminal device to perform the SSB measurement based on the SSB index interval, the network device may further determine third information, and send the third information to the terminal device. The third information indicates an SSB index window, and a quantity of SSBs in the SSB index window is less than a quantity of SSBs in one SSB period. Correspondingly, the terminal device may further receive the third information from the network device.

The terminal device may also determine the third information based on an orbit direction of the satellite and an arrangement direction of indexes of SSBs. It may be understood that when the orbit direction of the satellite is parallel to the arrangement direction of the indexes of the SSBs, the network device determines the third information, that is, determines the SSB index window. A specific value of the SSB index window may be determined by the network device based on an arrangement rule of the indexes of the SSBs.

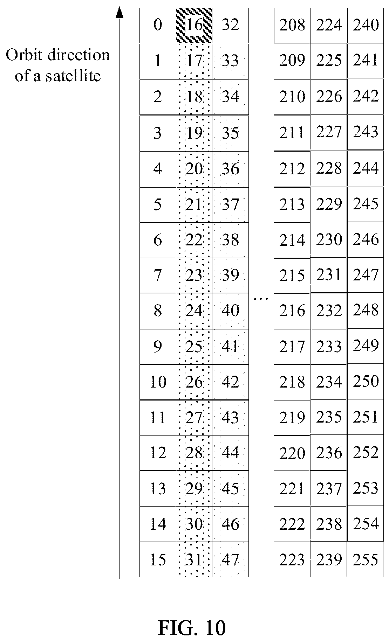

For example, FIG. 10 is another diagram in which a satellite scans SSBs. As shown in FIG. 10, one SSB period includes 256 SSBs, an orbit direction of the satellite points upward vertically, and an arrangement direction of indexes of the SSBs points downward vertically. In other words, the orbit direction of the satellite is parallel to the arrangement direction of the indexes of the SSBs. It can be learned from FIG. 10 that when the orbit direction of the satellite is parallel to the arrangement direction of the indexes of the SSBs, SSB coverage, of the satellite, in which the terminal device is located moves downward vertically. If a current SSB with good signal quality for the terminal device is an SSB whose index is 16, after the satellite moves, an SSB with good signal quality for the terminal device may be an SSB whose index is 17, 18, 19, 20, or the like. In this case, the network device may indicate, by using the SSB index window, the terminal device to perform the SSB measurement on a plurality of SSBs that are consecutive to the current SSB with good signal quality. In other words, the network device may indicate the SSB index window to the terminal device, so that the terminal device performs the SSB measurement on an SSB whose index is in the SSB index window in which the index of the current SSB with good signal quality is a start index. According to the arrangement rule of the indexes of the SSBs shown in FIG. 10, the network device may determine that the SSB index window is 16.

The network device indicates the SSB index window to the terminal device, so that the terminal device can perform, in the first period of the SSB measurement, the SSB measurement on the first SSB determined based on the first reference SSB and the SSB index window. The quantity of SSBs in the SSB index window is less than the quantity of SSBs in one SSB period. Therefore, the first SSB determined by the terminal device based on the first reference SSB and the SSB index window is a part of SSBs in one SSB period, so that energy consumption overheads of the terminal device can be reduced.

In still another optional implementation, when the first information indicates the terminal device to perform the SSB measurement based on the SSB index interval, the network device may further determine fourth information, and send the fourth information to the terminal device. The fourth information indicates an SSB time window, and the SSB time window is less than one SSB period. Correspondingly, the terminal device may further receive the fourth information from the network device.

The terminal device may also determine the fourth information based on an orbit direction of the satellite and an arrangement direction of indexes of SSBs. It may be understood that when the orbit direction of the satellite is parallel to the arrangement direction of the indexes of the SSBs, the network device determines the fourth information, that is, determines the SSB time window. The network device may determine a specific value of the SSB time window based on one SSB period.

For example, FIG. 10 is a diagram in which a satellite scans SSBs. An orbit direction of the satellite is parallel to an arrangement direction of indexes of the SSBs. It can be learned from FIG. 10 that SSB coverage, of the satellite, in which the terminal device is located moves downward vertically. If a current SSB with good signal quality for the terminal device is an SSB whose index is 16, after the satellite moves, an SSB with good signal quality for the terminal device may be an SSB whose index is 17, 18, 19, 20, or the like, that is, may be an SSB whose time domain position follows a time domain position of the SSB whose index is 16. In this case, the network device may indicate, by using the SSB time window, the terminal device to perform the SSB measurement on the SSB whose time domain position follows the time domain position of the SSB whose index is 16, so that the terminal device obtains an SSB with good signal quality when the satellite moves. If one SSB period includes 256 SSBs, and one SSB period is 640 ms, the network device may determine that the SSB time window is 20 ms, 40 ms, 80 ms, 100 ms, or the like.

The network device indicates the SSB time window to the terminal device, so that the terminal device can perform, in the first period of the SSB measurement, the SSB measurement on the first SSB determined based on the first reference SSB and the SSB time window. The SSB time window is less than one SSB period. Therefore, the first SSB determined by the terminal device based on the first reference SSB and the SSB time window is a part of SSBs in one SSB period, so that energy consumption overheads of the terminal device can be reduced.

Optionally, the network device may indicate the SSB index interval and the SSB index window to the terminal device, indicate the SSB index interval and the SSB time window, indicate the SSB index window and the SSB time window, or indicate the SSB index interval, the SSB index window, and the SSB time window. In other words, the terminal device may receive the second information and the third information from the network device, receive the second information and the fourth information, receive the third information and the fourth information, or receive the second information, the third information, and the fourth information. When receiving different information, the terminal device may determine the to-be-measured first SSB based on a parameter indicated by the received information and the first reference SSB.

Optionally, when the network device configures one or more of the SSB index interval, the SSB index window, and the SSB time window for the terminal device, the network device may further determine fifth information, and send the fifth information to the terminal device. The fifth information indicates an order in which the satellite scans SSBs. Correspondingly, the terminal device receives the fifth information from the network device.

When the satellite scans the SSBs in ascending order, an index of the first SSB is greater than an index of the first reference SSB. When the satellite scans the SSBs in descending order, the index of the first SSB is less than the index of the first reference SSB.

When the terminal device receives different information, first SSBs determined by the terminal device are different. The terminal device receiving different information may be understood as the terminal device receiving information of different content, or may be understood as the terminal device receiving one or more of the second information, the third information, and the fourth information. Therefore, SSBs on which the terminal device performs the SSB measurement in the first period of the SSB measurement are different. With reference to a type of information received by the terminal device, the following describes an implementation in which the terminal device performs, in the first period of the SSB measurement, the SSB measurement on the first SSB based on the first reference SSB.

Case 1: The terminal device receives the second information from the network device.

If the terminal device receives the second information from the network device, it indicates that the terminal device obtains the SSB index interval, to determine the first SSB based on the first reference SSB and the SSB index interval, and perform, in the first period of the SSB measurement, the SSB measurement on the determined first SSB. An interval between the index of the first SSB and the index of the first reference SSB is a positive integer multiple of the SSB index interval. In other words, the terminal device performs, in the first period of the SSB measurement, the SSB measurement on the first SSB whose index is separated from the index of the first reference SSB by a positive integer multiple of the SSB index interval.

For example, when the satellite scans SSBs in ascending order, the index of the first reference SSB is x, and the SSB index interval is *m,* the index of the first SSB is equal to [*x*+*m*•*n*], where x is an integer greater than or equal to 0, *m* is an integer greater than 1, and n is an integer greater than or equal to 1.

For another example, when the satellite scans SSBs in descending order, the index of the first reference SSB is x, and the SSB index interval is *m*, the index of the first SSB is equal to [*x*-*m*•*n*], where x is an integer greater than 0, *m* is an integer greater than 1, and *n* is an integer greater than or equal to 1.

For example, an orbit direction of the satellite is shown in FIG. 9, the first reference SSB autonomously determined by the terminal device is an SSB whose index is 2, and the SSB index interval is 16. In this case, the first SSB may be an SSB whose index is separated from 2 by a positive integer multiple of 16 in ascending order. For example, the first SSB may be an SSB whose index is 18, 34, 50, or the like. Therefore, the terminal device may perform, in the first period of the SSB measurement, the SSB measurement on the SSB whose index is separated from 2 by the positive integer multiple of 16, to obtain an SSB with good signal quality through the SSB measurement when the satellite moves. Further, the terminal device may perform cell reselection, cell handover, or the like based on the SSB with good signal quality.

For example, an arrangement of indexes of SSBs is shown in FIG. 9, an orbit direction of the satellite points rightward horizontally, the first reference SSB autonomously determined by the terminal device is an SSB whose index is 34, and the SSB index interval is 16. In this case, the first SSB may be an SSB whose index is separated from 34 by a positive integer multiple of 16 in descending order. For example, first SSBs are SSBs whose indexes are 18 and 2. Therefore, the terminal device may perform, in the first period of the SSB measurement, the SSB measurement on the SSBs whose indexes are 2 and 18.

Optionally, the terminal device may further perform, in the first period of the SSB measurement, the SSB measurement on one or more SSBs whose indexes precede and follow the index of the first SSB. In other words, the terminal device may further perform the SSB measurement on more SSBs based on the first SSB, to improve reliability of determining an SSB with good signal quality. For example, the first SSB determined by the terminal device based on the first reference SSB and the SSB index interval is an SSB whose index is 18, and the terminal device may further perform the SSB measurement on one or more SSBs whose indexes precede and follow the index 18. For example, the terminal device may further perform the SSB measurement on SSBs whose indexes are 17 and 19.

It can be learned that the first SSB determined by the terminal device based on the first reference SSB and the SSB index interval is a part of SSBs in one SSB period instead of all SSBs in one SSB period. Therefore, time for the SSB measurement by the terminal device can be reduced. In other words, energy consumption overheads of the terminal device can be reduced.

Case 2: The terminal device receives the third information from the network device.

If the terminal device receives the third information from the network device, it indicates that the terminal device obtains the SSB index window. In this case, the terminal device determines the first SSB based on the first reference SSB and the SSB index window, and performs, in the first period of the SSB measurement, the SSB measurement on the determined first SSB. The index of the first SSB is in the SSB index window in which the index of the first reference SSB is a start index. In other words, the terminal device performs, in the first period of the SSB measurement, the SSB measurement on the first SSB whose index is in the SSB index window in which the index of the first reference SSB is the start index.

For example, when the satellite scans SSBs in ascending order, the index of the first reference SSB is *x,* and the SSB index window is *m,* the first SSB is an SSB whose index is in indexes *x* to [*x+m*]*,* where x is an integer greater than or equal to 0, and *m* is a positive integer greater than 1.

For another example, when the satellite scans SSBs in descending order, the index of the first reference SSB is *x,* and the SSB index window is *m,* the first SSB is an SSB whose index is in indexes [x-m] to x, where x is an integer greater than or equal to 0 and less than x, and *m* is a positive integer greater than 1.

For example, an orbit direction of the satellite is shown in FIG. 10, the first reference SSB autonomously determined by the terminal device is an SSB whose index is 16, and the SSB index window is 16. In this case, the first SSB is an SSB whose index is in indexes 16 to 31. In this case, the terminal device performs, in the first period of the SSB measurement, the SSB measurement on the SSB whose index is in the indexes 16 to 31.

For example, an arrangement of indexes of SSBs is shown in FIG. 10, an orbit direction of the satellite points downward vertically, the first reference SSB autonomously determined by the terminal device is an SSB whose index is 47, and the SSB index window is 16. In this case, the first SSB is an SSB whose index is in indexes 32 to 47. Therefore, the terminal device performs, in the first period of the SSB measurement, the SSB measurement on the SSB whose index is in the indexes 32 to 47.

Optionally, the terminal device may further perform, in the first period of the SSB measurement, the SSB measurement on some SSBs whose indexes near the index of the first SSB, to improve reliability of determining an SSB with good signal quality. For example, the terminal device determines that the first SSB is the SSB whose index is in the indexes 32 to 47, and the terminal device may further perform, in the first period of the SSB measurement, the SSB measurement on SSBs whose indexes near the index 32 and the index 47, for example, may further perform the SSB measurement on SSBs whose indexes are 30 and 31, and perform the SSB measurement on SSBs whose indexes are 48 and 49.

It can be learned that the first SSB determined by the terminal device based on the first reference SSB and the SSB index window is also a part of SSBs in one SSB period. Therefore, a quantity of SSBs on which the terminal device performs SSB measurement can be reduced, so that energy consumption overheads of the terminal device can be reduced.

Case 3: The terminal device receives the fourth information from the network device.

If the terminal device receives the fourth information from the network device, it indicates that the terminal device obtains the SSB time window. In this case, the terminal device determines the first SSB based on the first reference SSB and the SSB time window, and performs, in the first period of the SSB measurement, the SSB measurement on the first SSB. A time domain position of the first SSB is in the SSB time window in which a time domain position of the first reference SSB is a start position. In other words, the terminal device performs, in the first period of the SSB measurement, the SSB measurement on the first SSB whose time domain position is in the SSB time window in which the time domain position of the first reference SSB is the start position.

When the satellite scans SSBs in ascending order, the time domain position of the first SSB is in an SSB time window following a start position: the time domain position of the first reference SSB. When the satellite scans SSBs in descending order, the time domain position of the first SSB is in an SSB time window preceding a start position: the time domain position of the first reference SSB.

For example, one SSB period includes 256 SSBs, one SSB period is 640 ms, the SSB time window is 40 ms, a frame structure of the SSBs is shown in FIG. 7, the first reference SSB is an SSB whose index is 5, and the satellite scans the SSBs in ascending order. In this case, the first SSB is an SSB included in 40 ms following a start position: a time domain position of the SSB whose index is 5. To be specific, it may be determined that first SSBs are SSBs whose indexes are 5 to 21.

The SSB time window is less than one SSB period. Therefore, the first SSB determined by the terminal device based on the first reference SSB and the SSB time window is also a part of SSBs in one SSB period, so that energy consumption overheads of the terminal device can be reduced.

Case 4: The terminal device receives the second information and the third information.

If the terminal device receives the second information and the third information, it indicates that the terminal device obtains the SSB index interval and the SSB index window. In this case, the terminal device determines the first SSB based on the first reference SSB, the SSB index interval, and the SSB index window, and performs, in the first period of the SSB measurement, the SSB measurement on the determined first SSB.

When determining the first SSB based on the first reference SSB, the SSB index interval, and the SSB index window, the terminal device may determine the first SSB with reference to an order in which the satellite scans SSBs.

For example, FIG. 9 is a diagram in which a satellite scans SSBs. The first reference SSB is an SSB whose index is 2, the SSB index interval indicated by the second information is 16, and the SSB index window indicated by the third information is 2. Because an orbit direction of the satellite points leftward horizontally, a possible better SSB for the terminal device is an SSB whose SSB index moves rightward. In this case, the terminal device first determines SSBs based on the first reference SSB and the SSB index interval, and the determined SSBs are SSBs whose indexes are 18, 34, and the like. In addition, because the SSB index window is 2, the terminal device may further determine, with reference to the SSB index window, that the SSB measurement may be performed on two SSBs preceding and following the SSBs whose indexes are 18, 34, and the like. To be specific, the SSB measurement may be performed on SSBs whose indexes are 0, 1, 2, 3, 4, 16, 17, 18, 19, 20, 32, 33, 34, 35, 36, and the like.

For example, FIG. 10 is a diagram in which a satellite scans SSBs. The first reference SSB is an SSB whose index is 16, the SSB index interval indicated by the second information is 1, and the SSB index window indicated by the third information is 16. Because an orbit direction of the satellite points upward vertically, an optimal SSB for the terminal device may be an SSB whose SSB index moves downward. In this case, the terminal device first determines SSBs based on the first reference SSB and the SSB index window, and the determined SSBs are SSBs whose indexes are 16 to 31. In addition, because the SSB index interval is 1, the terminal device may further determine, with reference to the SSB index interval, that the SSB measurement may be performed on SSBs whose indexes are 16 to 31, SSBs whose indexes are 32 to 47, and SSBs whose indexes are 0 to 15.

It can be learned that when the terminal device obtains the SSB index interval and the SSB index window, if an orbit direction of the satellite is perpendicular to an arrangement direction of indexes of SSBs, the terminal device may first determine an SSB based on the first reference SSB and the SSB index interval, and then determine the first SSB based on the determined SSB and the SSB index window. In comparison with performing the SSB measurement by the terminal device on an SSB determined based on the first reference SSB and the SSB index interval, in this manner, the terminal device can perform the SSB measurement on more SSBs, to increase a probability of determining an SSB with optimal signal quality.

When the terminal device obtains the SSB index interval and the SSB index window, if an orbit direction of the satellite is parallel to an arrangement direction of indexes of SSBs, the terminal device may first determine an SSB based on the first reference SSB and the SSB index window, and then determine the first SSB based on the determined SSB and the SSB index interval. In comparison with performing the SSB measurement by the terminal device on an SSB determined based on the first reference SSB and the SSB index window, in this manner, the terminal device can also perform the SSB measurement on more SSBs, to increase a probability of determining an SSB with optimal signal quality. In addition, in comparison with performing the SSB measurement on all SSBs in one SSB period, this implementation can still reduce energy consumption overheads of the terminal device.

In this implementation, specific values of the SSB index interval and the SSB index window may be properly configured by the network device with reference to an order in which the satellite scans SSBs.

Case 5: The terminal device receives the second information and the fourth information from the network device.

If the terminal device receives the second information and the fourth information, it indicates that the terminal device obtains the SSB index interval and the SSB time window. In this case, the terminal device may determine the first SSB based on the first reference SSB, the SSB index interval, and the SSB time window. When determining the first SSB based on the first reference SSB, the SSB index interval, and the SSB time window, the terminal device may also determine the first SSB with reference to a relationship between an orbit direction of the satellite and an arrangement direction of indexes of SSBs.

An implementation in which the terminal device determines the first SSB based on the first reference SSB, the SSB index interval, the SSB time window, and a relationship between an orbit direction of the satellite and an arrangement direction of indexes of SSBs is similar to an implementation in which the terminal device determines the first SSB based on the first reference SSB, the SSB index interval, the SSB index window, and a relationship between an orbit direction of the satellite and an arrangement direction of indexes of SSBs.

It may be understood that when the orbit direction of the satellite is perpendicular to the arrangement direction of the indexes of the SSBs, the terminal device determining the first SSB based on the first reference SSB, the SSB index interval, and the SSB time window may be understood as: determining an SSB based on the first reference SSB and the SSB index interval, and then determining the first SSB based on the determined SSB and the SSB time window. When the orbit direction of the satellite is parallel to the arrangement direction of the indexes of the SSBs, the terminal device determining the first SSB based on the first reference SSB, the SSB index interval, and the SSB time window may be understood as: determining an SSB based on the first reference SSB and the SSB time window, and then determining the first SSB based on the determined SSB and the SSB index interval.

For example, FIG. 9 is a diagram in which a satellite scans SSBs. The first reference SSB is an SSB whose index is 2, the SSB index interval indicated by the second information is 16, and the SSB time window indicated by the fourth information is 10 ms. The terminal device first determines SSBs based on the first reference SSB and the SSB index interval, and the determined SSBs are SSBs whose indexes are 18, 34, and the like. Then, the terminal device determines, with reference to the SSB time window, that the SSB measurement may be performed on the SSBs whose indexes are 18, 34, and the like, and SSBs included in 10 ms preceding and following time domain positions of the SSBs whose indexes are 18, 34, and the like.

For example, FIG. 10 is a diagram in which a satellite scans SSBs. The first reference SSB is an SSB whose index is 5, the SSB index interval indicated by the second information is 1, and the SSB time window indicated by the fourth information is 40 ms. SSBs determined by the terminal device based on the first reference SSB and the SSB time window are SSBs whose indexes are 5 to 21. Then, the terminal device determines, with reference to the SSB index interval, that the SSB measurement may be performed on the SSBs whose indexes are 5 to 21, SSBs whose indexes are 21 to 37, and SSBs whose indexes are 0 to 5.

In this implementation, specific values of the SSB index interval and the SSB time window may also be properly configured by the network device with reference to an order in which the satellite scans SSBs.

In this implementation, the terminal device can also perform the SSB measurement on more SSBs, to increase a probability of determining an SSB with optimal signal quality. In comparison with performing the SSB measurement on all SSBs in one SSB period, energy consumption overheads of the terminal device can still be reduced.

Case 6: The terminal device receives the third information and the fourth information from the network device.

If the terminal device receives the third information and the fourth information, it indicates that the terminal device obtains the SSB index window and the SSB time window. In this case, the terminal device may determine the first SSB based on the first reference SSB, the SSB index window, and the SSB time window. It may be understood that the terminal device determines a part of SSBs based on the first reference SSB and the SSB index window, and determines another part of SSBs based on the first reference SSB and the SSB time window. Then, the terminal device determines the first SSB from the two parts of SSBs, and may determine an intersection of the two parts of determined SSBs as the first SSB.

For example, FIG. 10 shows that a satellite scans SSBs. The first reference SSB is an SSB whose index is 17. SSBs determined by the terminal device based on the first reference SSB and the SSB index window are SSBs whose indexes are 17 to 32. SSBs determined by the terminal device based on the first reference SSB and the SSB time window are SSBs whose indexes are 17 to 25. In this case, the terminal device determines that first SSBs are the SSBs whose indexes are 17 to 25.

Case 7: The terminal device receives the second information, the third information, and the fourth information.

If the terminal device receives the second information, the third information, and the fourth information, it indicates that the terminal device obtains the SSB index interval, the SSB index window, and the SSB time window. In this case, the terminal device determines the first SSB based on the first reference SSB, the SSB index interval, the SSB index window, and the SSB time window. Further, the terminal device performs, in the first period of the SSB measurement, the SSB measurement on the determined first SSB.

It may be understood that when a trajectory direction of the satellite is perpendicular to an arrangement direction of indexes of SSBs, the terminal device determining the first SSB based on the first reference SSB, the SSB index interval, the SSB index window, and the SSB time window may be understood as: determining an SSB based on the first reference SSB and the SSB index interval, and then determining the first SSB based on the determined SSB, the SSB index window, and the SSB time window. When a trajectory direction of the satellite is parallel to an arrangement direction of indexes of SSBs, the terminal device determining the first SSB based on the first reference SSB, the SSB index interval, the SSB index window, and the SSB time window may be understood as: determining an SSB based on the first reference SSB, the SSB index window, and the SSB time window, and then determining the first SSB based on the determined SSB and the SSB index interval. For an implementation in which the terminal device determines the first SSB based on the first reference SSB, the SSB index window, and the SSB time window, refer to the descriptions in Case 6. Details are not described again.

In conclusion, regardless of which one or more of the second information, the third information, and the fourth information are received by the terminal device, the first SSB determined by the terminal device based on the first reference SSB and the received information is a part of SSBs in one SSB period. Therefore, the terminal device performs, in the first period of the SSB measurement, the SSB measurement on a part of SSBs in one SSB period, so that energy consumption overheads of the terminal device can be reduced.

In an optional implementation, one or more of the first information, the second information, the third information, and the fifth information are carried in radio resource control (Radio Resource Control, RRC) signaling. It may be understood that the network device sends one or more of the first information, the second information, the third information, and the fifth information to the terminal device in the idle state by using RRC common signaling. For example, the network device sends one or more of the first information, the second information, the third information, and the fifth information to the terminal device in the idle state by using a system information block (System Information Block, SIB) or other system information (Other system messages, OSI). The network device sends one or more of the first information, the second information, the third information, and the fifth information to the terminal device in the connected state by using RRC dedicated signaling.

In an optional implementation, the terminal device may further perform, in a second period of the SSB measurement, the SSB measurement on a second SSB based on a second reference SSB. The second reference SSB is determined by the terminal device based on a measurement result, in the first period, of the SSB measurement.

In other words, after completing the SSB measurement on the first SSB in the first period, the terminal device determines the second reference SSB based on a plurality of SSB measurement results. The second reference SSB may be an SSB with best signal quality in the plurality of SSB measurement results. The terminal device may determine the second SSB based on the first reference SSB and one or more of the received second information, third information, and fourth information. In this case, the terminal device may perform, in the second period of the SSB measurement, the SSB measurement on the determined second SSB.

Similarly, in each subsequent period of the SSB measurement, the terminal device may determine, based on a measurement result of the SSB measurement performed in a previous period of the SSB measurement, a reference SSB based on which the SSB measurement is performed in the period of the SSB measurement. In this case, the terminal device may determine, based on the determined reference SSB, an SSB that needs to be measured, and may perform, in the period of the SSB measurement, the SSB measurement on the determined SSB.

It can be learned that, in each period of the SSB measurement, a reference SSB based on which the terminal device performs the SSB measurement may be autonomously determined by the terminal device, so that energy consumption overheads of the terminal device can be reduced, and signaling overheads can be reduced in comparison with constantly indicating a reference SSB to the terminal device by the network device.

In this embodiment of this application, after receiving the first information indicating to perform the SSB measurement, the terminal device performs, in the first period of the SSB measurement, the SSB measurement on the first SSB based on the autonomously determined first reference SSB.

For the terminal device in the idle state, the network device cannot learn of location information of the terminal device, and cannot learn of an SSB with good signal quality for the terminal device. In this case, if the network device indicates, to the terminal device, a reference SSB based on which SSB measurement is performed, the network device indicates, in consideration of location information of all terminal devices in an idle state, a same reference SSB to the terminal devices in the idle state. Consequently, each terminal device needs to perform SSB measurement on a large quantity of SSBs, causing high energy consumption overheads. However, if the terminal device in the idle state autonomously determines a first reference SSB based on which SSB measurement is performed, an appropriate first reference SSB can be autonomously determined while a quantity of to-be-measured SSBs is minimized, so that energy consumption overheads of the terminal device can be reduced.

For the terminal device in the connected state, when the satellite rapidly changes, a reference SSB for the terminal device constantly changes. In this case, if the network device indicates, to the terminal device, a reference SSB based on which SSB measurement is performed, the network device needs to indicate, to the terminal device for a plurality of times on different time domain resources based on a change in the satellite, a reference SSB based on which SSB measurement is performed, causing a large quantity of signaling overheads. In addition, if the network device indicates once, to the terminal device in consideration of the constant change in the reference SSB caused by the rapid change in the satellite, a reference SSB based on which SSB measurement is performed, the terminal device determines, based on the indicated reference SSB, that SSB measurement needs to be performed on a large quantity of SSBs, causing high energy consumption overheads. However, if the terminal device in the connected state autonomously determines a first reference SSB based on which SSB measurement is performed, an appropriate first reference SSB can be autonomously determined while a quantity of to-be-measured SSBs is minimized, so that energy consumption overheads of the terminal device can be reduced. In addition, in this manner, no additional interaction between the terminal device and the network device is required, so that signaling overheads can be reduced.

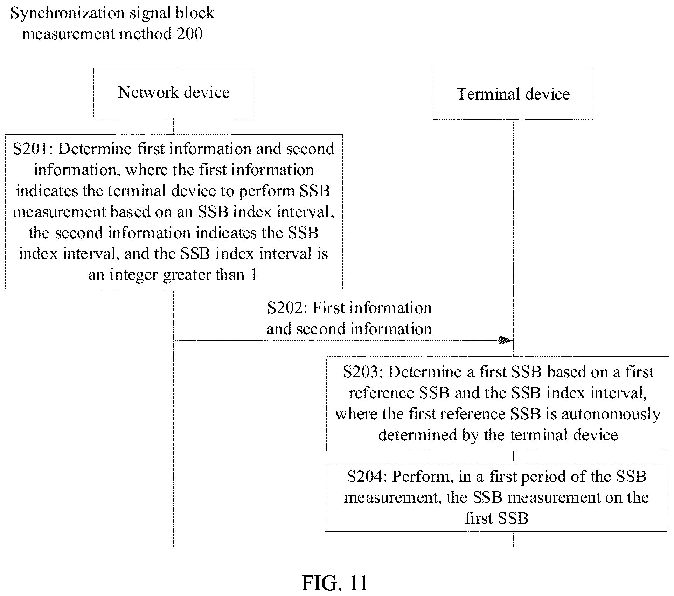

An embodiment of this application further provides a synchronization signal block measurement method 200. FIG. 11 is an interaction diagram of the synchronization signal block measurement method 200. The synchronization signal block measurement method 200 is also described from the perspective of interaction between a network device and a terminal device. The synchronization signal block measurement method 200 includes but is not limited to the following steps.

S201: The network device determines first information and second information, where the first information indicates the terminal device to perform SSB measurement based on an SSB index interval, the second information indicates the SSB index interval, and the SSB index interval is an integer greater than 1.

It may be understood that the SSB index interval is an interval between an index of an SSB and an index of another SSB. For example, SSBs include an SSB1 and an SSB2, an index (index) of the SSB1 is 0, an index of the SSB2 is 1, and an SSB index interval between the SSB1 and the SSB2 is 1.

The first information and the second information may be same information, or may be different information. The first information and the second information being the same information may be understood as follows: The first information and the second information are sent at a same time. The first information and the second information being different information may be understood as follows: The first information and the second information are sent at different times.

For an implementation in which the network device determines the second information, refer to the descriptions in the synchronization signal block measurement method 100. Details are not described again.

S202: The network device sends the first information and the second information to the terminal device. Correspondingly, the terminal device receives the first information and the second information from the network device.

S203: The terminal device determines a first SSB based on a first reference SSB and the SSB index interval, where the first reference SSB is autonomously determined by the terminal device.

S204: The terminal device performs, in a first period of the SSB measurement, the SSB measurement on the first SSB.

It may be understood that for an implementation in which the terminal device determines the first reference SSB and an implementation in which the terminal device determines the first SSB based on the first reference SSB and the SSB index interval, refer to the descriptions in the synchronization signal block measurement method 100. Details are not described again.

In an optional implementation, the network device may further send fifth information to the terminal device. The fifth information indicates an order in which a satellite scans SSBs, and the satellite scans the SSBs in ascending order or descending order. Correspondingly, the terminal device may further receive the fifth information from the terminal device.

The terminal device may determine the first SSB based on the first reference SSB and the SSB index interval with reference to the order in which the satellite scans the SSBs. For a specific implementation, refer to the descriptions in the synchronization signal block measurement method 100. Details are not described again.

In this embodiment of this application, the network device indicates, by using the first information, the terminal device to perform the SSB measurement based on the SSB index interval, and indicates the SSB index interval to the terminal device by using the second information. In this case, the terminal device performs, in the first period of the SSB measurement, the SSB measurement on the first SSB determined based on the SSB index interval and the autonomously determined first reference SSB. Further, the terminal device does not perform the SSB measurement on all SSBs in one SSB period, but performs the SSB measurement on a part of SSBs in one SSB period, so that energy consumption overheads of the terminal device can be reduced.

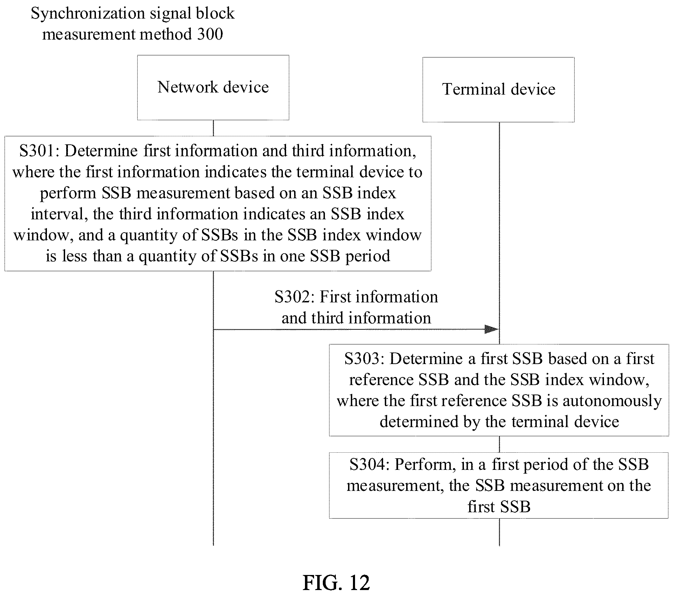

An embodiment of this application further provides a synchronization signal block measurement method 300. FIG. 12 is an interaction diagram of the synchronization signal block measurement method 300. The synchronization signal block measurement method 300 is also described from the perspective of interaction between a network device and a terminal device. The synchronization signal block measurement method 300 includes but is not limited to the following steps.

S301: The network device determines first information and third information, where the first information indicates the terminal device to perform SSB measurement based on an SSB index interval, the third information indicates an SSB index window, and a quantity of SSBs in the SSB index window is less than a quantity of SSBs in one SSB period.

The first information and the third information may be same information, or may be different information. The first information and the third information being the same information may be understood as follows: The first information and the third information are sent at a same time. The first information and the third information being different information may be understood as follows: The first information and the third information are sent at different times.

For an implementation in which the network device determines the third information, refer to the descriptions in the synchronization signal block measurement method 100. Details are not described again.

S302: The network device sends the first information and the third information to the terminal device. Correspondingly, the terminal device receives the first information and the third information from the network device.

S303: The terminal device determines a first SSB based on a first reference SSB and the SSB index window, where the first reference SSB is autonomously determined by the terminal device.

S304: The terminal device performs, in a first period of the SSB measurement, the SSB measurement on the first SSB.

It may be understood that for an implementation in which the terminal device determines the first reference SSB and an implementation in which the terminal device determines the first SSB based on the first reference SSB and the SSB index window, refer to the descriptions in the synchronization signal block measurement method 100. Details are not described again.

In an optional implementation, the network device may further send fifth information to the terminal device. The fifth information indicates an order in which a satellite scans SSBs, and the satellite scans the SSBs in ascending order or descending order. Correspondingly, the terminal device may further receive the fifth information from the terminal device.

The terminal device may determine the first SSB based on the first reference SSB and the SSB index window with reference to the order in which the satellite scans the SSBs. For a specific implementation, refer to the descriptions in the synchronization signal block measurement method 100. Details are not described again.

In this embodiment of this application, the network device indicates, by using the first information, the terminal device to perform the SSB measurement based on the SSB index interval, and indicates the SSB index window to the terminal device by using the third information. In this case, the terminal device performs, in the first period of the SSB measurement, the SSB measurement on the first SSB determined based on the SSB index window and the autonomously determined first reference SSB. In this manner, the determined first SSB is a part of SSBs in one SSB period, so that energy consumption overheads of the terminal device can be reduced.

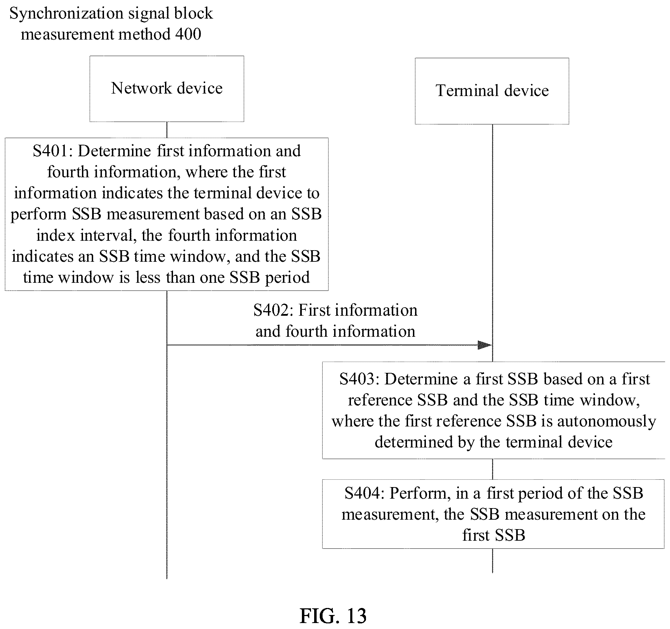

An embodiment of this application further provides a synchronization signal block measurement method 400. FIG. 13 is an interaction diagram of the synchronization signal block measurement method 400. The synchronization signal block measurement method 400 is also described from the perspective of interaction between a network device and a terminal device. The synchronization signal block measurement method 400 includes but is not limited to the following steps.

S401: The network device determines first information and fourth information, where the first information indicates the terminal device to perform SSB measurement based on an SSB index interval, the fourth information indicates an SSB time window, and the SSB time window is less than one SSB period.

The first information and the fourth information may be same information, or may be different information. The first information and the fourth information being the same information may be understood as follows: The first information and the fourth information are sent at a same time. The first information and the fourth information being different information may be understood as follows: The first information and the fourth information are sent at different times.

For an implementation in which the network device determines the fourth information, refer to the descriptions in the synchronization signal block measurement method 100. Details are not described again.

S402: The network device sends the first information and the fourth information to the terminal device. Correspondingly, the terminal device receives the first information and the fourth information from the network device.

S403: The terminal device determines a first SSB based on a first reference SSB and the SSB time window, where the first reference SSB is autonomously determined by the terminal device.

S404: The terminal device performs, in a first period of the SSB measurement, the SSB measurement on the first SSB.

It may be understood that for an implementation in which the terminal device determines the first reference SSB and an implementation in which the terminal device determines the first SSB based on the first reference SSB and the SSB time window, refer to the descriptions in the synchronization signal block measurement method 100. Details are not described again.

In an optional implementation, the network device may further send fifth information to the terminal device. The fifth information indicates an order in which a satellite scans SSBs, and the satellite scans the SSBs in ascending order or descending order. Correspondingly, the terminal device may further receive the fifth information from the terminal device.

The terminal device may determine, based on the order in which the satellite scans the SSBs, whether the first SSB is an SSB in an SSB time window preceding or following a start position: a time domain position of the first reference SSB. When the satellite scans the SSBs in ascending order, the terminal device determines that the first SSB is the SSB in the SSB time window following the start position: the time domain position of the first reference SSB. When the satellite scans the SSBs in descending order, the terminal device determines that the first SSB is the SSB in the SSB time window preceding the start position: the time domain position of the first reference SSB. In this implementation, the terminal device can flexibly determine, based on the order in which the satellite scans the SSBs and the SSB time window, the first SSB, in one SSB period, that needs to be measured, so that energy consumption overheads of the terminal device can be reduced.

In this embodiment of this application, the network device indicates, by using the first information, the terminal device to perform the SSB measurement based on the SSB index interval, and indicates the SSB time window to the terminal device by using the fourth information. In this case, the terminal device performs, in the first period of the SSB measurement, the SSB measurement on the first SSB determined based on the SSB time window and the autonomously determined first reference SSB. In this manner, the determined first SSB is also a part of SSBs in one SSB period, so that energy consumption overheads of the terminal device can be reduced.

It may be understood that the synchronization signal block measurement method 200, the synchronization signal block measurement method 300, and the synchronization signal block measurement method 400 may be combined with each other to form embodiments having different implementations. This is not limited in embodiments of this application. For example, the synchronization signal block measurement method 200 may be combined with the synchronization signal block measurement method 300 to form a new synchronization signal block measurement method.

For the technical solution described above, the following further describes a corresponding apparatus implementation solution.

To implement functions in the method provided in embodiments of this application, a network device and a terminal device may include a hardware structure and/or a software module, and implement the functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

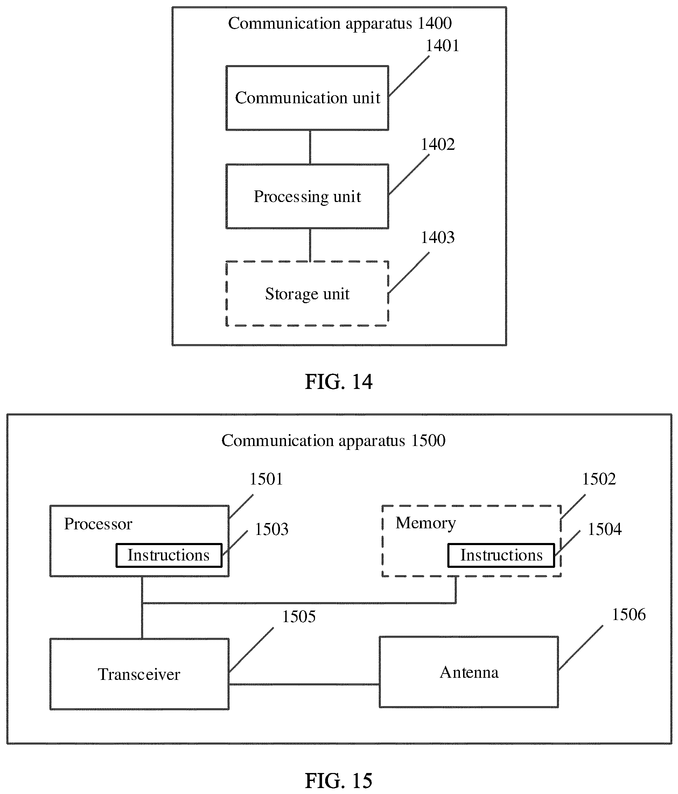

As shown in FIG. 14, an embodiment of this application provides a communication apparatus 1400. The communication apparatus 1400 may be a component (for example, an integrated circuit or a chip) of a network device, or may be a component (for example, an integrated circuit or a chip) of a terminal device. Alternatively, the communication apparatus 1400 may be another communication unit, configured to implement the method in method embodiments of this application. The communication apparatus 1400 may include a communication unit 1401 and a processing unit 1402. Optionally, a storage unit 1403 may be further included.

In a possible design, one or more units in FIG. 14 may be implemented by one or more processors, or implemented by one or more processors and memories, or implemented by one or more processors and transceivers, or implemented by one or more processors, memories, and transceivers. This is not limited in embodiments of this application. The processor, the memory, and the transceiver may be disposed separately, or may be integrated.

The communication apparatus 1400 has a function of implementing the network device or the terminal device described in embodiments of this application. For example, the communication apparatus 1400 includes a corresponding module, unit, or means (means) used for the network device to perform the steps that are related to the network device and that are described in embodiments of this application. The function, the unit, or the means (means) may be implemented by software or hardware, may be implemented by hardware executing corresponding software, or may be implemented by a combination of software and hardware. For details, refer to the corresponding descriptions in the foregoing corresponding method embodiments.

In a possible design, a communication apparatus 1400 may include a processing unit 1402 and a communication unit 1401.

The communication unit 1401 is configured to receive first information from a network device, where the first information indicates a terminal device to perform synchronization signal block SSB measurement.

The processing unit 1402 is configured to perform, in a first period of the SSB measurement, the SSB measurement on a first SSB based on a first reference SSB, where the first reference SSB is autonomously determined by the terminal device.

In an optional implementation, the first information indicates the terminal device to perform the SSB measurement based on an SSB index interval.

In an optional implementation, the communication unit 1401 is further configured to receive second information, where the second information indicates the SSB index interval, an interval between an index of the first SSB and an index of the first reference SSB is a positive integer multiple of the SSB index interval, and the SSB index interval is an integer greater than 1.

In an optional implementation, the communication unit 1401 is further configured to receive third information, where the third information indicates an SSB index window, the index of the first SSB is in the SSB index window in which the index of the first reference SSB is a start index, and a quantity of SSBs in the SSB index window is less than a quantity of SSBs in one SSB period.

In an optional implementation, the communication unit 1401 is further configured to receive fourth information, where the fourth information indicates an SSB time window, a time domain position of the first SSB is in the SSB time window in which a time domain position of the first reference SSB is a start position, and the SSB time window is less than one SSB period.

In an optional implementation, the communication unit 1401 is further configured to receive fifth information, where the fifth information indicates an order in which a satellite scans SSBs; and when the satellite scans the SSBs in ascending order, the index of the first SSB is greater than the index of the first reference SSB; or when the satellite scans the SSBs in descending order, the index of the first SSB is less than the index of the first reference SSB.

In an optional implementation, the processing unit 1402 is further configured to perform, in a second period of the SSB measurement, the SSB measurement on a second SSB based on a second reference SSB, where the second reference SSB is determined by the terminal device based on a measurement result, in the first period, of the SSB measurement.

This embodiment of this application and the foregoing method embodiments are based on a same concept, and bring same technical effects. For a specific principle, refer to the descriptions in the foregoing embodiments. Details are not described again.

In another possible design, a communication apparatus 1400 may include a processing unit 1402 and a communication unit 1401.

The processing unit 1402 is configured to determine first information, and determine one or more of second information, third information, and fourth information.

The communication unit 1401 is configured to send the first information to a terminal device, and send one or more of the second information, the third information, and the fourth information.

The first information indicates the terminal device to perform synchronization signal block SSB measurement based on an SSB index interval, the second information indicates the SSB index interval, the third information indicates an SSB index window, and the fourth information indicates an SSB time window.

The SSB index interval is an integer greater than 1, a quantity of SSBs in the SSB index window is less than a quantity of SSBs in one SSB period, and the SSB time window is less than one SSB period.

In an optional implementation, the communication unit 1401 is further configured to send fifth information, where the fifth information indicates an order in which a satellite scans SSBs.

This embodiment of this application and the foregoing method embodiments are based on a same concept, and bring same technical effects. For a specific principle, refer to the descriptions in the foregoing embodiments. Details are not described again.

An embodiment of this application further provides a communication apparatus 1500. FIG. 15 is a diagram of a structure of the communication apparatus 1500. The communication apparatus 1500 may be a network device, or may be a chip, a chip system, a processor, or the like that supports a network device in implementing the foregoing method; or may be a terminal device, or may be a chip, a chip system, a processor, or the like that supports a terminal device in implementing the foregoing method. The apparatus may be configured to implement the method described in the foregoing method embodiments. For details, refer to the descriptions in the foregoing method embodiments.

The communication apparatus 1500 may include one or more processors 1501. The processor 1501 may be a general-purpose processor, a dedicated processor, or the like. For example, the processor may be a baseband processor, a digital signal processor, an application-specific integrated circuit, a field programmable gate array or another programmable logic device, a discrete gate or a transistor logic device, a discrete hardware component, or a central processing unit (central processing unit, CPU). The baseband processor may be configured to process a communication protocol and communication data. The central processing unit may be configured to: control a communication apparatus (for example, a base station, a baseband chip, a terminal, a terminal chip, a distributed unit DU, or a central unit CU), execute a software program, and process data of the software program.

Optionally, the communication apparatus 1500 may include one or more memories 1502. The memory may store instructions 1504, and the instructions may be run on the processor 1501, to enable the communication apparatus 1500 to perform the method described in the foregoing method embodiments. Optionally, the memory 1502 may further store data. The processor 1501 and the memory 1502 may be disposed separately, or may be integrated together.

The memory 1502 may include but is not limited to a non-volatile memory such as a hard disk drive (hard disk drive, HDD) or a solid-state drive (solid-state drive, SSD), a random access memory (Random Access Memory, RAM), an erasable programmable read-only memory (Erasable Programmable ROM, EPROM), a ROM, a compact disc read-only memory (Compact Disc Read-Only Memory, CD-ROM), or the like.

Optionally, the communication apparatus 1500 may further include a transceiver 1505 and an antenna 1506. The transceiver 1505 may be referred to as a transceiver unit, a transceiver machine, a transceiver circuit, or the like, and is configured to implement a transceiver function. The transceiver 1505 may include a receiver and a transmitter. The receiver may be referred to as a receiving machine, a receiver circuit, or the like, and is configured to implement a receiving function. The transmitter may be referred to as a transmitting machine, a transmitter circuit, or the like, and is configured to implement a sending function.

When the communication apparatus 1500 is a network device, the processor 1501 is configured to: perform S101 in the synchronization signal block measurement method 100, perform S201 in the synchronization signal block measurement method 200, perform S301 in the synchronization signal block measurement method 300, and perform S401 in the synchronization signal block measurement method 400; and the transceiver 1505 is configured to: perform S102 in the synchronization signal block measurement method 100, perform S202 in the synchronization signal block measurement method 200, perform S302 in the synchronization signal block measurement method 300, and perform S402 in the synchronization signal block measurement method 400.

When the communication apparatus 1500 is a terminal device, the processor 1501 is configured to: perform S103 in the synchronization signal block measurement method 100, perform S203 and S204 in the synchronization signal block measurement method 200, perform S303 and S304 in the synchronization signal block measurement method 300, and perform S403 and S404 in the synchronization signal block measurement method 400; and the transceiver 1505 is configured to: perform S102 in the synchronization signal block measurement method 100, perform S202 in the synchronization signal block measurement method 200, perform S302 in the synchronization signal block measurement method 300, and perform S402 in the synchronization signal block measurement method 400.

In another possible design, the processor 1501 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, optionally, the processor 1501 may store instructions 1503. When the instructions 1503 are run on the processor 1501, the communication apparatus 1500 may be enabled to perform the method described in the foregoing method embodiments. The instructions 1503 may be fixed in the processor 1501. In this case, the processor 1501 may be implemented by hardware.

In still another possible design, the communication apparatus 1500 may include a circuit. The circuit may implement a sending, receiving, or communication function in the foregoing method embodiments. The processor and the transceiver described in embodiments of this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-channel metal oxide semiconductor (nMetal-oxide-semiconductor, NMOS), a P-channel metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

A scope of the communication apparatus described in embodiments of this application is not limited thereto, and the structure of the communication apparatus may not be limited by FIG. 15. The communication apparatus may be an independent device or may be a part of a large device. For example, the communication apparatus may be:
(1) an independent integrated circuit IC, a chip, or a chip system or subsystem;
(2) a set that has one or more ICs, where optionally, the IC set may alternatively include a storage component configured to store data and instructions;
(3) an ASIC, such as a modem (modulator); or
(4) a module that can be embedded in another device.

The communication apparatus and the chip in this embodiment of this application may further perform the implementation of the communication apparatus 1500. A person skilled in the art may further understand that various illustrative logical blocks (illustrative logic block) and steps (step) that are listed in embodiments of this application may be implemented by using electronic hardware, computer software, or a combination thereof. Whether such a function is implemented by using hardware or software depends on particular applications and a design requirement of an entire system. A person skilled in the art may use various methods to implement the described functions for each particular application, but it shall not be considered that the implementation goes beyond the protection scope of embodiments of this application.

This embodiment of this application and the method embodiments shown in the synchronization signal block measurement method 100 to the synchronization signal block measurement method 400 are based on a same concept, and bring same technical effects. For a specific principle, refer to the descriptions in embodiments shown in the synchronization signal block measurement method 100 to the synchronization signal block measurement method 400. Details are not described again.

An embodiment of this application further provides a computer-readable storage medium, configured to store computer software instructions. When the instructions are executed by a communication apparatus, a function in any one of the foregoing method embodiments is implemented.

An embodiment of this application further provides a computer program product, configured to store computer software instructions. When the instructions are executed by a communication apparatus, a function in any one of the foregoing method embodiments is implemented.

An embodiment of this application further provides a computer program. When the computer program is run on a computer, a function in any one of the foregoing method embodiments is implemented.

An embodiment of this application further provides a communication system. The system includes a network device and a satellite. Optionally, the system further includes a terminal device. In another possible design, the system may further include another device that interacts with the terminal device, the network device, and the satellite.

The terms "first", "second", and the like in the specification, claims, and accompanying drawings of this application are intended to distinguish between different objects, but are not intended to describe a specific sequence. "First", "second", and the like are merely intended for a purpose of description, and shall not be understood as an indication or implication of relative importance or implicit indication of a quantity of indicated technical features. Therefore, a feature defined by "first", "second", or the like, may explicitly or implicitly include one or more features. In the descriptions in embodiments, unless otherwise specified, "a plurality of" means two or more.

In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that, in embodiments of this application, "a plurality of" means two or more. The term "and/or" is used to describe an association relationship between associated objects, and indicates that three relationships may exist. For example, "A and/or B" may indicate three cases: Only A exists, only B exists, and both A and B exist, where A and B may be singular or plural. The character "/" generally indicates an "or" relationship between the associated objects. Both "when" and "if" mean that corresponding processing is performed in an objective case, are not intended to limit time, do not require a determining action during implementation, and do not mean that there is another limitation.

In embodiments of this application, the expression "example", "for example", or the like is used to give an example, an illustration, or a description. Any embodiment or design scheme described as an "example" or "for example" in embodiments of this application shall not be explained as being more preferred or having more advantages than another embodiment or design scheme. Exactly, use of the expression "example", "for example", or the like is intended to present a related concept in a specific manner for ease of understanding.

All or some of the foregoing embodiments may be implemented by using software, hardware, firmware, or any combination thereof. When software is used to implement embodiments, all or some of the embodiments may be implemented in a form of computer program product. The computer program product includes one or more computer instructions. When the computer instructions are loaded and executed on a computer, all or some of procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, an SSD), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A synchronization signal block measurement method, wherein the method comprises:
receiving first information from a network device, wherein the first information indicates a terminal device to perform synchronization signal block SSB measurement; and
performing, in a first period of the SSB measurement, the SSB measurement on a first SSB based on a first reference SSB, wherein the first reference SSB is autonomously determined by the terminal device.

2. The method according to claim 1, wherein the first information indicates the terminal device to perform the SSB measurement based on an SSB index interval.

3. The method according to claim 1 or 2, wherein the method further comprises:
receiving second information, wherein the second information indicates the SSB index interval;
an interval between an index of the first SSB and an index of the first reference SSB is a positive integer multiple of the SSB index interval; and
the SSB index interval is an integer greater than 1.

4. The method according to any one of claims 1 to 3, wherein the method further comprises:
receiving third information, wherein the third information indicates an SSB index window;
the index of the first SSB is in the SSB index window in which the index of the first reference SSB is a start index; and
a quantity of SSBs in the SSB index window is less than a quantity of SSBs in one SSB period.

5. The method according to any one of claims 1 to 4, wherein the method further comprises:
receiving fourth information, wherein the fourth information indicates an SSB time window;
a time domain position of the first SSB is in the SSB time window in which a time domain position of the first reference SSB is a start position; and
the SSB time window is less than one SSB period.

6. The method according to claim 3 or 4, wherein the method further comprises:
receiving fifth information, wherein the fifth information indicates an order in which a satellite scans SSBs; and
when the satellite scans the SSBs in ascending order, the index of the first SSB is greater than the index of the first reference SSB; or
when the satellite scans the SSBs in descending order, the index of the first SSB is less than the index of the first reference SSB.

7. The method according to any one of claims 1 to 6, wherein the method further comprises:
performing, in a second period of the SSB measurement, the SSB measurement on a second SSB based on a second reference SSB, wherein
the second reference SSB is determined by the terminal device based on a measurement result, in the first period, of the SSB measurement.

8. A synchronization signal block measurement method, wherein the method comprises:
determining first information, and determining one or more of second information, third information, and fourth information; and
sending the first information to a terminal device, and sending one or more of the second information, the third information, and the fourth information, wherein the first information indicates the terminal device to perform synchronization signal block SSB measurement based on an SSB index interval, the second information indicates the SSB index interval, the third information indicates an SSB index window, and the fourth information indicates an SSB time window, the SSB index interval is an integer greater than 1, a quantity of SSBs in the SSB index window is less than a quantity of SSBs in one SSB period, and the SSB time window is less than one SSB period.

9. The method according to claim 8, wherein the method further comprises:
sending fifth information, wherein the fifth information indicates an order in which a satellite scans SSBs.

10. A communication apparatus, wherein the apparatus comprises a processing unit and a communication unit;
the communication unit is configured to receive first information from a network device, wherein the first information indicates the apparatus to perform synchronization signal block SSB measurement; and
the processing unit is configured to perform, in a first period of the SSB measurement, the SSB measurement on a first SSB based on a first reference SSB, wherein
the first reference SSB is autonomously determined by the apparatus.

11. The apparatus according to claim 10, wherein the first information indicates the apparatus to perform the SSB measurement based on an SSB index interval.

12. The apparatus according to claim 10 or 11, wherein
the communication unit is further configured to receive second information, wherein the second information indicates the SSB index interval;
an interval between an index of the first SSB and an index of the first reference SSB is a positive integer multiple of the SSB index interval; and
the SSB index interval is an integer greater than 1.

13. The apparatus according to any one of claims 10 to 12, wherein
the communication unit is further configured to receive third information, wherein the third information indicates an SSB index window;
the index of the first SSB is in the SSB index window in which the index of the first reference SSB is a start index; and
a quantity of SSBs in the SSB index window is less than a quantity of SSBs in one SSB period.

14. The apparatus according to any one of claims 10 to 13, wherein
the communication unit is further configured to receive fourth information, wherein the fourth information indicates an SSB time window;
a time domain position of the first SSB is in the SSB time window in which a time domain position of the first reference SSB is a start position; and
the SSB time window is less than one SSB period.

15. The apparatus according to claim 12 or 13, wherein
the communication unit is further configured to receive fifth information, wherein the fifth information indicates an order in which a satellite scans SSBs; and
when the satellite scans the SSBs in ascending order, the index of the first SSB is greater than the index of the first reference SSB; or
when the satellite scans the SSBs in descending order, the index of the first SSB is less than the index of the first reference SSB.

16. The apparatus according to any one of claims 10 to 15, wherein
the processing unit is further configured to perform, in a second period of the SSB measurement, the SSB measurement on a second SSB based on a second reference SSB, wherein
the second reference SSB is determined by the apparatus based on a measurement result, in the first period, of the SSB measurement.

17. A communication apparatus, wherein the apparatus comprises a processing unit and a communication unit;
the processing unit is configured to determine first information, and determine one or more of second information, third information, and fourth information; and
the communication unit is configured to send the first information to a terminal device, and send one or more of the second information, the third information, and the fourth information, wherein
the first information indicates the terminal device to perform synchronization signal block SSB measurement based on an SSB index interval, the second information indicates the SSB index interval, the third information indicates an SSB index window, and the fourth information indicates an SSB time window; and
the SSB index interval is an integer greater than 1, a quantity of SSBs in the SSB index window is less than a quantity of SSBs in one SSB period, and the SSB time window is less than one SSB period.

18. The apparatus according to claim 17, wherein
the communication unit is further configured to send fifth information, wherein the fifth information indicates an order in which a satellite scans SSBs.

19. A communication apparatus, comprising a processor and a transceiver, wherein the transceiver is configured to communicate with another communication apparatus, and the processor is configured to run a program, to enable the communication apparatus to implement the method according to any one of claims 1 to 7 or implement the method according to claim 8 or 9.

20. A communication system, comprising an apparatus configured to perform the method according to any one of claims 1 to 7, and an apparatus configured to perform the method according to claim 8 or 9.

21. A computer-readable storage medium, wherein the computer-readable storage medium is configured to store instructions, and when the instructions are run on a computer, the method according to any one of claims 1 to 7 is performed, or the method according to claim 8 or 9 is performed.

22. A computer program product comprising instructions, wherein when the computer program product is run on a computer, the method according to any one of claims 1 to 7 is performed, or the method according to claim 8 or 9 is performed.
